# EUROPEAN PATENT APPLICATION

(11) **EP 4 276 644 A1**
(43) Date of publication of application: **15.11.2023**
(21) Application number: 21921897.1
(22) Date of filing: 29.01.2021
(51) Int. Cl.: G06F 13/40, G06F 13/42

(54) **APPARATUS WITH FORWARD/REVERSE PLUG INTERFACE, AND DETECTION METHOD**

(71) Applicant: Huawei Technologies Co., Ltd., Shenzhen, Guangdong 518129 (CN)
(72) Inventor: ZHANG, Weixing, Shenzhen, Guangdong 518129 (CN); QIAN, Zhaohua, Shenzhen, Guangdong 518129 (CN); KE, Jiandong, Shenzhen, Guangdong 518129 (CN)
(74) Representative: Gill Jennings & Every LLP
(86) International application number: PCT/CN2021/074512
(87) International publication number: WO 2022/160295

(57) **Abstract**

An apparatus with a forward-reverse insertion interface and a detection method are provided, and relate to the field of communication technologies, to improve transmission efficiency of an auxiliary channel. The forward-reverse insertion interface of the apparatus includes: a first auxiliary channel (CH1), including a first switch selection circuit (SW1) coupled to a first node (A); a second auxiliary channel (CH2), including a second switch selection circuit (SW2) coupled to a second node (B), where the second switch selection circuit (SW2) and the first switch selection circuit (SW1) are structurally asymmetrical; and a control circuit (CTRL), configured to control switching of the first switch selection circuit (SW1) to change an electrical parameter of the first node (A), and control switching of the second switch selection circuit (SW2) to change an electrical parameter of the second node (B), where switching states of the first switch selection circuit (SW1) and the second switch selection circuit (SW2) are consistent.

## Description

### TECHNICAL FIELD

This application relates to the field of communication technologies, and in particular, to an apparatus with a forward-reverse insertion interface and a detection method.

### BACKGROUND

Currently, most mobile terminal devices have forward-reverse insertion interfaces. The forward-reverse insertion interface is an interface that can support forward insertion and reverse insertion, for example, a universal serial bus type-C (universal serial bus type-C, USB Type-C) interface, and a lightning (lightning) interface. Generally, in addition to a high-speed data channel, the forward-reverse insertion interface further includes an auxiliary channel for transmitting an auxiliary signal. The auxiliary signal may be used to implement insertion and removal detection, forward-reverse insertion detection, and other auxiliary functions of a device.

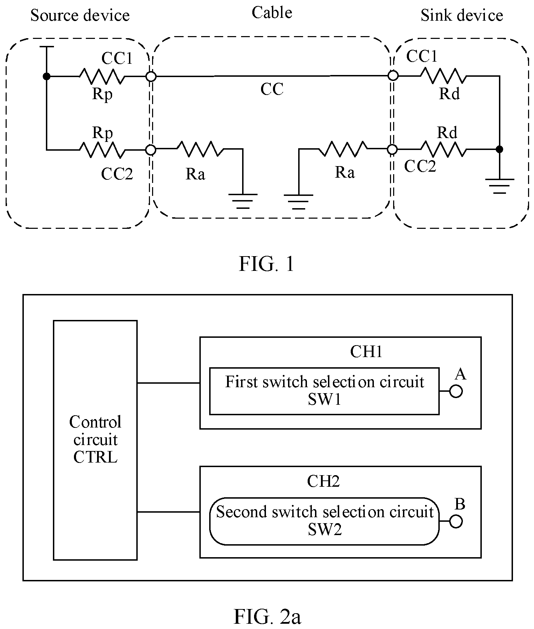

In a current technology, for the USB type-C interface or the lightning interface, the interface generally includes two auxiliary channels. The two auxiliary channels are auxiliary channels respectively in a case of forward insertion and reverse insertion. When the auxiliary channel corresponding to the forward insertion is connected, the interface is in a forward insertion state. When the auxiliary channel corresponding to the reverse insertion is connected, the interface is in a reverse insertion state. For example, the USB type-C interface is used as an example. As shown in FIG. 1, the two auxiliary channels in the interface may be represented by auxiliary signals CC1 and CC2 that are respectively transmitted. When the interface is located in a source (source) device, the two auxiliary channels each are pulled up to a power supply end by using a resistor Rp. When the interface is located in a sink (sink) device, the two auxiliary channels each are pulled down to a grounding end by using a resistor Rd. The source device and the sink device are connected through a cable. If a channel that is for transmitting the CC1 and that is in the source device is connected to a channel that is for transmitting the CC1 or the CC2 and that is in the sink device, the USB type-C interface is in the forward insertion state. If a channel that is for transmitting the CC2 and that is in the source device is connected to the channel that is for transmitting the CC1 or the CC2 and that is in the sink device, the USB type-C interface is in the reverse insertion state.

When the forward-reverse insertion interface provided in the technical solutions is in an inserted state, only one auxiliary channel is in a connected state so that the auxiliary channel can only be used for sending or receiving at the same time. In other words, when the forward-reverse insertion interface is in the inserted state, the auxiliary signal is transmitted in a half-duplex transmission manner. Consequently, transmission efficiency is low.

### SUMMARY

This application provides an apparatus with a forward-reverse insertion interface and a forward-reverse insertion interface detection method. These may be used to establish a full-duplex transmission path based on two auxiliary channels in the forward-reverse insertion interface in an inserted state, to improve transmission efficiency of the auxiliary channels.

To achieve the foregoing objective, this application uses the following technical solutions.

According to a first aspect, an apparatus with a forward-reverse insertion interface is provided. The forward-reverse insertion interface includes a first auxiliary channel, a second auxiliary channel, and a control circuit. The first auxiliary channel includes a first switch selection circuit, where the first switch selection circuit is coupled to a first node. The first node may be a node used by the first auxiliary channel for receiving or sending data. The second auxiliary channel includes a second switch selection circuit, where the second switch selection circuit is coupled to a second node. The second node may be a node used by the second auxiliary channel for receiving or sending the data. The second switch selection circuit and the first switch selection circuit are structurally asymmetrical. The control circuit is configured to control switching of the first switch selection circuit to change an electrical parameter of the first node, and control switching of the second switch selection circuit to change an electrical parameter of the second node. Switching states of the first switch selection circuit and the second switch selection circuit are consistent.

In the foregoing technical solution, the forward-reverse insertion interface has two independent auxiliary channels. The first switch selection circuit and the second switch selection circuit in the two auxiliary channels are structurally asymmetric, in other words, the two auxiliary channels are asymmetrically set. In this way, in an inserted state of the forward-reverse insertion interface, the electrical parameter (for example, a voltage or a current) of the first node is different from the electrical parameter of the second node, so that forward insertion and reverse insertion of the forward-reverse insertion interface can be effectively distinguished. In addition, the asymmetrical setting may enable the two auxiliary channels in the forward-reverse insertion interface to be respectively connected to two auxiliary channels in an interface of a peer device through two conducting wires in a cable. In this way, both the two auxiliary channels are in a connected state when the forward-reverse insertion interface is in the inserted state. In other words, both the two auxiliary channels may be used to transmit information simultaneously. Therefore, in the inserted state, a full-duplex transmission path may be established based on the two auxiliary channels, to improve transmission efficiency of the auxiliary channels. However, the auxiliary channel in the forward-reverse insertion interface provided in a conventional technology has two groups of completely symmetrical pins, so that the auxiliary channel can work in either a forward insertion state or a reverse insertion state. However, regardless of forward insertion or reverse insertion, only one group of pins are used to transmit data, and the other group of pins are not used to transmit data. As a result, the transmission efficiency is low.

In a possible implementation of the first aspect, the first auxiliary channel further includes a first transceiver coupled to the first node, and the first auxiliary channel may receive or send the data by using the first transceiver. The second auxiliary channel further includes a second transceiver coupled to the second node, and the second auxiliary channel may receive or send the data by using the second transceiver. The control circuit is further configured to: control transmitting and receiving statuses of the first transceiver and the second transceiver based on the electrical parameter of the first node or the electrical parameter of the second node. For example, one of the first transceiver and the second transceiver is controlled to be in a transmitting state and the other transceiver is controlled to be in a receiving state. The electrical parameter includes the voltage or the current.

In the foregoing possible implementation, the control circuit is further configured to control the first transceiver and the second transceiver to be in different transmitting and receiving statuses based on the electrical parameter of the first node or the electrical parameter of the second node. For example, one of the first transceiver and the second transceiver is controlled to be in the transmitting state and the other transceiver is controlled to be in the receiving state. In this way, the two auxiliary channels may be set to the full-duplex transmission path. Then, when the data is transmitted through the two auxiliary channels, the transmission efficiency of the auxiliary channels can be improved.

In a possible implementation of the first aspect, the control circuit is further configured to: determine a status of the forward-reverse insertion interface based on the electrical parameter of the first node or the electrical parameter of the second node. The status of the forward-reverse insertion interface may be unattached, inserted, removed, forward-inserted, or reverse-inserted. The electrical parameter includes the voltage or the current.

In the foregoing possible implementation, because the first switch selection circuit and the second switch selection circuit are structurally asymmetric, in the inserted state of the forward-reverse insertion interface, the electrical parameter of the first node is different from the electrical parameter of the second node. Therefore, the control circuit may effectively distinguish, based on the electrical parameter of the first node or the electrical parameter of the second node, statuses of insertion, removal, forward insertion, and reverse insertion of the forward-reverse insertion interface.

In a possible implementation of the first aspect, the second switch selection circuit and the first switch selection circuit being structurally asymmetrical includes: A first end of the first switch selection circuit is coupled to the first node, a second end of the first switch selection circuit is coupled to a first voltage end by using a first pull-up resistor, and a third end of the first switch selection circuit is coupled to a grounding end by using a first pull-down resistor; and a first end of the second switch selection circuit is coupled to the second node, a second end of the second switch selection circuit is coupled to the first voltage end by using a second pull-up resistor, and a third end of the second switch selection circuit is suspended.

In the foregoing possible implementation, the third end of the first switch selection circuit is coupled to the grounding end by using the first pull-down resistor. The third end of the second switch selection circuit is suspended. In this way, the second switch selection circuit and the first switch selection circuit are structurally asymmetrical.

In a possible implementation of the first aspect, the apparatus further includes a detection circuit that is configured to detect the electrical parameter of the first node and the electrical parameter of the second node, and send the electrical parameters to the control circuit.

In the foregoing possible implementation, the detection circuit may serve as an analog circuit, and the control circuit may be a digital circuit. Therefore, the detection circuit may be configured to detect the electrical parameter of the first node and the electrical parameter of the second node, and send the detected electrical parameter of the first node and the detected electrical parameter of the second node to the control circuit. In this way, the control circuit implements the foregoing control function based on the electrical parameter of the first node and the electrical parameter of the second node.

In a possible implementation of the first aspect, the apparatus may serve as a powered device. The powered device may also be referred to as a sink (sink) device. In other words, the device does not have a power supply capability, and needs to be connected to another device (for example, power sourcing equipment) to supply power to the device. Correspondingly, the apparatus further includes a direct current/direct current voltage converter, and a marker resistor coupled between the first node and the grounding end. An input end of the direct current/direct current voltage converter is configured to receive an input direct current voltage. The direct current voltage may be provided by the power sourcing equipment connected to the apparatus. A voltage value of the direct current voltage is related to a resistance value of the marker resistor. An output end of the direct current/direct current voltage converter is configured to supply power to the apparatus.

In the foregoing possible implementation, serving as the powered device, the apparatus may convert, by using the direct current/direct current voltage converter, the received input end into a voltage needed for supplying power to the apparatus, thereby implementing power supply to the apparatus. In addition, the voltage value of the direct current voltage received by the input end of the direct current/direct current voltage converter is related to the resistance value of the marker resistor. In this way, when different powered devices need to input different direct current voltages, marker resistors with different resistance values may be correspondingly disposed, thereby implementing power supply of powered devices with different voltage requirements. This solution is also applicable to power supply of a high-consumption powered device. In this way, power supply costs of the high-consumption powered device can be reduced.

In a possible implementation of the first aspect, the first end of the first switch selection circuit is connected to a fourth end of the first switch selection circuit by default. The first end of the second switch selection circuit is connected to a fourth end of the second switch selection circuit by default. Both the fourth end of the first switch selection circuit and the fourth end of the second switch selection circuit are in a floating state. When the apparatus is the powered device, the control circuit is further configured to control the second transceiver to be in the transmitting state.

In the foregoing possible implementation, when the apparatus serves as the powered device, the first end of the first switch selection circuit and the first end of the second switch selection circuit are respectively connected to fourth ends by default. In this case, the control circuit may control the second transceiver to be in the transmitting state and the first transceiver to be in the default receiving state. In addition, a device connected to the apparatus controls a first transceiver of the device to be in the transmitting state and a second transceiver to be in the default receiving state. Therefore, the two auxiliary channels in the forward-reverse insertion interface are set to the full-duplex transmission path. Then, when the data is transmitted through the two auxiliary channels, the transmission efficiency of the auxiliary channels can be improved.

In a possible implementation of the first aspect, the apparatus may serve as the power sourcing equipment. In other words, the apparatus has an external power supply and the power supply capability, and can supply power to another device (for example, the powered device) by using a connector on the device. Correspondingly, the apparatus further includes the direct current/direct current voltage converter and a switch. The input end of the direct current/direct current voltage converter is configured to receive a first direct current voltage. The output end of the direct current/direct current voltage converter is coupled to a first end of the switch. A second end of the switch is configured to output a second direct current voltage.

In the foregoing possible implementation, serving as the power sourcing equipment, the apparatus may convert the received first direct current voltage into the second direct current voltage by using the direct current/direct current voltage converter, and may output the second direct current voltage when the switch is turned on. Therefore, the second direct current voltage is provided to the device (that is, the powered device) connected to the apparatus, to supply power to the device connected to the apparatus.

In a possible implementation of the first aspect, serving as the power sourcing equipment, the apparatus further includes an alternating current/direct current voltage converter. An input end of the alternating current/direct current voltage converter is configured to receive an alternating current voltage. An output end of the alternating current/direct current voltage converter is configured to output the first direct current voltage.

In the foregoing possible implementation, serving as the power sourcing equipment, the apparatus may convert the received alternating current voltage into the first direct current voltage by using the alternating current/direct current voltage converter, to directly or indirectly provide the first direct current voltage to the device that is connected to the apparatus. Power supply of the device connected to the apparatus is implemented.

In a possible implementation of the first aspect, when the apparatus serves as the power sourcing equipment, the control circuit is further configured to: if a voltage of the first node or a voltage of the second node is within a preset voltage range and duration of being within the preset voltage range is greater than first preset time, determine that the forward-reverse insertion interface is in the inserted state; if the voltage of the first node or the voltage of the second node is switched from the preset voltage range to a pull-up voltage or a pull-down voltage, determine that the forward-reverse insertion interface is removed; and if the voltage of the first node or the voltage of the second node is switched between the pull-up voltage and the pull-down voltage, determine that the forward-reverse insertion interface is in the unattached state.

In the foregoing possible implementation, if the apparatus serves as the power sourcing equipment, when the forward-reverse insertion interface is in different statuses of being inserted, removed, or unattached, the control circuit correspondingly controls connection states of the first switch selection circuit and the second switch selection circuit. For example, the first end of the first switch selection circuit is controlled to be connected to the second end, or the first end of the first switch selection circuit is controlled to be connected to the third end. In this way, the voltage of the first node and the voltage of the second node change. Therefore, the control circuit may determine, based on different change states of the voltage of the first node or the voltage of the second node, the forward-reverse insertion interface is in the inserted, removed, or unattached state.

In a possible implementation of the first aspect, when the apparatus serves as the power sourcing equipment, the first end of the first switch selection circuit is connected to the second end of the first switch selection circuit. In addition, the first end of the second switch selection circuit is connected to the second end of the second switch selection circuit. The control circuit is further configured to: if the voltage of the first node is within the preset voltage range and the duration of being within the preset voltage range is greater than the first preset time, determine that the forward-reverse insertion interface is in the forward insertion state; and if the voltage of the second node is within the preset voltage range and the duration of being within the preset voltage range is greater than the first preset time, determine that the forward-reverse insertion interface is in the reverse insertion state.

In the foregoing possible implementation, because the first switch selection circuit and the second switch selection circuit in the forward-reverse insertion interface are structurally asymmetrical. In this way, if the apparatus serves as the power sourcing equipment and supplies the power, the voltage of the first node in the forward-reverse insertion interface is different from the voltage of the second node. Therefore, the control circuit may, when the voltage of the first node or the voltage of the second node is within the preset voltage range and the duration of being within the preset voltage range is greater than the first preset time, determine that the forward-reverse insertion interface is in the forward insertion state, and when the voltage of the second node is within the preset voltage range and the duration of being within the preset voltage range is greater than the first preset time, determine that the forward-reverse insertion interface is in the reverse insertion state. In other words, the forward insertion state or the reverse insertion state of the forward-reverse insertion interface is determined based on the voltage of the first node and the voltage of the second node.

In a possible implementation of the first aspect, when the apparatus serves as the power sourcing equipment, the control circuit is further configured to: when the forward-reverse insertion interface is in the forward insertion state, control the first transceiver to be in the transmitting state, and the second transceiver is the default receiving state; and when the forward-reverse insertion interface is in the reverse insertion state, control the second transceiver to be in the transmitting state, and the first transceiver is the default receiving state.

In the foregoing possible implementation, when the apparatus serves as the power sourcing equipment, and the forward-reverse insertion interface is in the forward insertion state, the control circuit may control the first transceiver to be in the transmitting state and the second transceiver to be in the default receiving state. In this case, the device connected to the apparatus controls the second transceiver of the device to be in the transmitting state and the first transceiver to be in the default receiving state. Therefore, the full-duplex transmission path is established based on the two auxiliary channels in the forward-reverse insertion interface. Then, when the data is transmitted through the two auxiliary channels, the transmission efficiency of the auxiliary channels can be improved.

In a possible implementation of the first aspect, when the apparatus serves as the power sourcing equipment, the control circuit is further configured to: when the forward-reverse insertion interface is in the forward insertion state, adjust an output voltage of the direct current/direct current voltage converter based on the voltage of the first node; and when the forward-reverse insertion interface is in the reverse insertion state, adjust the output voltage of the direct current/direct current voltage converter based on the voltage of the second node. Optionally, adjusting an output voltage of the direct current/direct current voltage converter based on the voltage of the first node may include: determining a voltage requirement of the connected device based on the voltage of the first node, and further adjusting the output voltage of the DC/DC voltage converter. Similarly, adjusting the output voltage of the direct current/direct current voltage converter based on the voltage of the second node may include: determining a voltage requirement of the connected device based on the voltage of the second node, and further adjusting the output voltage of the DC/DC voltage converter.

In the foregoing possible implementation, when the apparatus serves as the power sourcing equipment, if the forward-reverse insertion interface is in the forward insertion state, the voltage of the first node is determined by the voltage division of the marker resistor in the device connected to the apparatus. The resistance value of the marker resistor is related to a voltage needed by the device connected to the apparatus. Therefore, the control circuit may adjust the output voltage of the direct current/direct current voltage converter based on the voltage of the first node, so that the output voltage meets the voltage needed by the device connected to the apparatus. Similarly, if the forward-reverse insertion interface is in the reverse insertion state, the voltage of the second node is determined by the voltage division of the marker resistor in the device connected to the apparatus. The resistance value of the marker resistor is related to the voltage needed by the device connected to the apparatus. Therefore, the control circuit may adjust the output voltage of the direct current/direct current voltage converter based on the second node voltage, so that the output voltage meets the voltage needed by the device connected to the apparatus.

In a possible implementation of the first aspect, the control circuit is further configured to: obtain, from a preset voltage relationship, a first output voltage corresponding to a first marker voltage, where the first marker voltage is the voltage of the first node or the voltage of the second node, and the preset voltage relationship indicates a correspondence between a plurality of marker voltages and a plurality of output voltages; and adjust the output voltage of the direct current/direct current voltage converter to be equal to the first output voltage.

In the foregoing possible implementation, a simple and effective manner of determining the first output voltage corresponding to the first marker voltage is provided. The preset voltage relationship includes a relationship between a larger quantity of marker voltages or a higher value of the marker voltage and the output voltages. Therefore, more or higher values of the output voltages can be provided based on the preset relationship, so that power supply requirements of different high-power devices can be met.

In a possible implementation of the first aspect, when the apparatus serves as the power sourcing equipment, the control circuit is further configured to: determine, based on the voltage of the first node or the voltage of the second node, a type of a device connected to the forward-reverse insertion interface. The type is a powered device or power sourcing equipment.

In the foregoing possible implementation, when the apparatus serves as the power sourcing equipment, the voltage of the first node or the voltage of the second node is related to the type of the device connected to the apparatus. For example, if the voltage of the first node or the voltage of the second node is 0, the type of the device connected to the apparatus is the power sourcing equipment. If the voltage of the first node or the voltage of the second node is not 0, and is within a marker voltage range, the type of the device connected to the apparatus is the powered device. Therefore, the apparatus may determine, based on the voltage of the first node or the voltage of the second node, the type of the device connected to the forward-reverse insertion interface. In this way, whether the power needs to be supplied to the connected device is determined based on the type of the connected device.

In a possible implementation of the first aspect, when the apparatus serves as the power sourcing equipment and does not need to supply power to the connected device, the first end of the first switch selection circuit is connected to the third end of the first switch selection circuit. In addition, the first end of the second switch selection circuit is connected to the third end of the second switch selection circuit. The control circuit is further configured to: control the second transceiver to be in the transmitting state and the first transceiver to be in the default receiving state.

In the foregoing possible implementation, when the apparatus serves as the power sourcing equipment and does not need to supply power to the connected device, and when the apparatus may fix the first end of the first switch selection circuit to be connected to the third end of the first switch selection circuit, and the first end of the second switch selection circuit is connected to the third end of the second switch selection circuit, the control circuit may control the second transceiver to be in the transmitting state and the first transceiver to be in the default receiving state. In this case, the device connected to the apparatus may control the first transceiver to be in the transmitting state and the second transceiver to be in the default receiving state. Therefore, the full-duplex transmission path is established based on the two auxiliary channels in the forward-reverse insertion interface. Then, when the data is transmitted through the two auxiliary channels, the transmission efficiency of the auxiliary channels can be improved.

According to a second aspect, a forward-reverse insertion interface detection method is provided. A forward-reverse insertion interface includes a first auxiliary channel, a second auxiliary channel, and a control circuit. The first auxiliary channel includes a first switch selection circuit. The second auxiliary channel includes a second switch selection circuit. The first switch selection circuit and the second switch selection circuit are structurally asymmetrical. The first switch selection circuit is coupled to a first node. The first node may be a node used by the first auxiliary channel for receiving or sending data. The second switch selection circuit is coupled to a second node. The second node may be a node used by the second auxiliary channel for receiving or sending the data. The method includes: controlling, by the control circuit, switching of the first switch selection circuit to change an electrical parameter of the first node, and controlling switching of the second switch selection circuit to change an electrical parameter of the second node, where switching states of the first switch selection circuit and the second switch selection circuit are consistent, and an electrical parameter of the first node and an electrical parameter of the second node are used to determine a status of the forward-reverse insertion interface; and determining the status of the forward-reverse insertion interface based on the electrical parameter of the first node or the electrical parameter of the second node, where the status of the forward-reverse insertion interface may be unattached, inserted, removed, forward-inserted, or reverse-inserted.

In a possible implementation of the second aspect, the first auxiliary channel further includes a first transceiver coupled to the first node, and the first auxiliary channel may receive or send the data by using the first transceiver. The second auxiliary channel further includes a second transceiver coupled to the second node, and the second auxiliary channel may receive or send the data by using the second transceiver. The method further includes: controlling transmitting and receiving statuses of the first transceiver and the second transceiver based on the electrical parameter of the first node or the electrical parameter of the second node. For example, one of the first transceiver and the second transceiver is controlled to be in a transmitting state and the other transceiver is controlled to be in a receiving state. The electrical parameter includes the voltage or the current.

In a possible implementation of the second aspect, when the electrical parameter includes the voltage, determining the status of the forward-reverse insertion interface based on the electrical parameter of the first node or the electrical parameter of the second node includes: if a voltage of the first node or a voltage of the second node is within a preset voltage range and duration of being within the preset voltage range is greater than first preset time, determining that the forward-reverse insertion interface is in the inserted state; if the voltage of the first node or the voltage of the second node is switched from the preset voltage range to a pull-up voltage or a pull-down voltage, determining that the forward-reverse insertion interface is in the removed state; and if the voltage of the first node or the voltage of the second node is switched between the pull-up voltages and the pull-down voltage, determining that the forward-reverse insertion interface is in the unattached state.

In a possible implementation of the second aspect, that the first switch selection circuit and the second switch selection circuit are structurally asymmetrical includes: A first end of the first switch selection circuit is coupled to the first node, a second end of the first switch selection circuit is coupled to a first voltage end by using a first pull-up resistor, and a third end of the first switch selection circuit is coupled to a grounding end by using a first pull-down resistor; and a first end of the second switch selection circuit is coupled to the second node, a second end of the second switch selection circuit is coupled to the first voltage end by using a second pull-up resistor, and a third end of the second switch selection circuit is suspended.

In a possible implementation of the second aspect, the first end of the first switch selection circuit is connected to the third end of the first switch selection circuit. The first end of the second switch selection circuit is connected to the third end of the second switch selection circuit. The second auxiliary channel further includes the second transceiver coupled to the second node. When the apparatus is power sourcing equipment and does not need to supply power to a connected device, the method further includes: controlling the second transceiver to be in the transmitting state.

In a possible implementation of the second aspect, the first end of the first switch selection circuit is connected to the second end of the first switch selection circuit. In addition, the first end of the second switch selection circuit is connected to the second end of the second switch selection circuit. Determining the status of the forward-reverse insertion interface based on the electrical parameter of the first node or the electrical parameter of the second node further includes: if the voltage of the first node is within the preset voltage range and the duration of being within the preset voltage range is greater than the first preset time, determining that the forward-reverse insertion interface is in the forward insertion state; and if the voltage of the second node is within the preset voltage range and the duration of being within the preset voltage range is greater than the first preset time, determining that the forward-reverse insertion interface is in the reverse insertion state.

In a possible implementation of the second aspect, the first auxiliary channel further includes the first transceiver coupled to the first node. The second auxiliary channel further includes the second transceiver coupled to the second node. When the apparatus is the power sourcing equipment, the first end of the first switch selection circuit is connected to the second end of the first switch selection circuit, and the first end of the second switch selection circuit is connected to the second end of the second switch selection circuit, the method further includes: when the forward-reverse insertion interface is in the forward insertion state, controlling the first transceiver to be in the transmitting state; and when the forward-reverse insertion interface is in the reverse insertion state, controlling the second transceiver to be in the transmitting state.

In a possible implementation of the second aspect, serving as the power sourcing equipment, the apparatus further includes a direct current/direct current voltage converter. The direct current/direct current voltage converter is configured to convert a received direct current voltage into an output voltage. The method further includes: when the forward-reverse insertion interface is in the forward insertion state, adjusting an output voltage of the direct current/direct current voltage converter based on the voltage of the first node; and/or when the forward-reverse insertion interface is in the reverse insertion state, adjusting the output voltage of the direct current/direct current voltage converter based on the voltage of the second node.

In a possible implementation of the second aspect, when the apparatus serves as the power sourcing equipment, adjusting the output voltage of the direct current/direct current voltage converter includes: obtain, from a preset voltage relationship, a first output voltage corresponding to a first marker voltage, where the first marker voltage is the voltage of the first node or the voltage of the second node, and the preset voltage relationship indicates a correspondence between a plurality of marker voltages and a plurality of output voltages; and adjust the output voltage of the direct current/direct current voltage converter to be equal to the first output voltage.

In a possible implementation of the second aspect, when the apparatus serves as the power sourcing equipment, the method further includes: determine, based on the voltage of the first node or the voltage of the second node, a type of a device connected to the forward-reverse insertion interface. The type of the device is a powered device or the power sourcing equipment.

According to a third aspect, a communication system is provided. The communication system includes a first device and a second device. At least one of the first device and the second device includes the apparatus with a forward-reverse insertion interface according to the first aspect or any one of possible implementations of the first aspect.

It may be understood that any forward-reverse insertion interface detection method, the communication system, and the like provided above includes all content that has the forward-reverse insertion interface provided above. Therefore, for a beneficial effect that can be achieved by the method, the communication system, and the like, refer to the beneficial effect in an interrupt reporting apparatus provided above. Details are not described herein again.

### BRIEF DESCRIPTION OF DRAWINGS

FIG. 1 is a schematic diagram of a forward-reverse insertion interface in a conventional technology;
FIG. 2a is a schematic diagram of a structure of an apparatus with a forward-reverse insertion interface according to an embodiment of this application;
FIG. 2b is a schematic diagram of a structure of an apparatus with a forward-reverse insertion interface according to an embodiment of this application;
FIG. 3 is a schematic diagram of a structure of another apparatus with a forward-reverse insertion interface according to an embodiment of this application;
FIG. 4 is a schematic diagram of a structure of still another apparatus with a forward-reverse insertion interface according to an embodiment of this application;
FIG. 5 is a schematic diagram of a structure of another apparatus with a forward-reverse insertion interface according to an embodiment of this application;
FIG. 6a is a schematic diagram of a connection between a device A and a device B that are in a forward insertion state according to an embodiment of this application;
FIG. 6b is a schematic diagram of a connection between a device A and a device B that are in a reverse insertion state according to an embodiment of this application;
FIG. 7a is a schematic diagram of enabling a first transceiver by a device A according to an embodiment of this application;
FIG. 7b is a schematic diagram of enabling a second transceiver by a device A according to an embodiment of this application;
FIG. 8 is a schematic diagram of a connection between power sourcing equipment A and a powered device B according to an embodiment of this application;
FIG. 9 is a schematic diagram of a connection between power sourcing equipment A and power sourcing equipment B according to an embodiment of this application;
FIG. 10 is a schematic diagram of a connection between a power adapter A and a powered device B according to an embodiment of this application;
FIG. 11 is a schematic flowchart of a detection method according to an embodiment of this application;
FIG. 12 is a schematic flowchart of another detection method according to an embodiment of this application;
FIG. 13 is a schematic flowchart of detecting an inserted state and a removed state according to an embodiment of this application; and
FIG. 14 is a schematic flowchart of detecting forward insertion and reverse insertion according to an embodiment of this application.

### DESCRIPTION OF EMBODIMENTS

Construction and practice of various embodiments are discussed in detail below. However, it should be understood that a plurality of applicable inventive concepts provided in this application can be implemented in a plurality of specific environments. The specific embodiments discussed are merely illustrative of specific manners to implement and use the specification and the technologies, and do not limit the scope of this application.

Unless defined otherwise, all technical and scientific terms used herein have the same meaning as commonly understood by a person of ordinary skill in the art to which this disclosure belongs.

Each circuit or another component may be described as or referred to as "configured to" perform one or more tasks. In this case, "configured to" is used to imply a structure by indicating that the circuit/component includes a structure (for example, a circuit system) that performs one or more tasks during operation. Therefore, the circuit/component can be referred to as being configured to perform the task even when the specified circuit/component is not currently operational (for example, is not on). The circuit/component used with the term "configured to" includes hardware, for example, a circuit that performs an operation.

The following describes technical solutions in embodiments of this application with reference to the accompanying drawings in embodiments of this application. In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural.

In embodiments of this application, words such as "first" and "second" are used to distinguish objects with similar names, functions, or purposes. A person skilled in the art may understand that the words such as "first" and "second" do not limit a quantity or an execution sequence. The term "coupled" is used to indicate an electrical connection, including a direct connection through a conducting wire or a connecting end, or an indirect connection through another component. Therefore, the "coupled" should be considered as an electronic communication connection in a broad sense.

It should be noted that in this application, the word such as "example" or "for example" is used to represent giving an example, an illustration, or a description. Any embodiment or design scheme described as an "example" or "for example" in this application should not be explained as being more preferred or having more advantages than another embodiment or design scheme. Exactly, use of the word "example", "for example", or the like is intended to present a relative concept in a specific manner.

The technical solutions of this application may be applied to various electronic devices with forward-reverse insertion interfaces. The forward-reverse insertion interface has an auxiliary channel. The auxiliary channel (for example, a first auxiliary channel CH1 and a second auxiliary channel CH2 in the following) may also be referred to as a sideband link (sideband link, SL). The sideband link has functions such as detection, information exchange, and high-speed data training. For example, the sideband link may implement detection of insertion, forward insertion, or reverse insertion of the forward-reverse insertion interface, and low-speed data transmission in the forward-reverse insertion interface.

In this application, the electronic device may be deployed on land, including an indoor or outdoor device, a handheld device, or a vehicle-mounted device. The electronic device may also be deployed on water (for example, on a ship). The electronic device may also be deployed in the air (for example, on an airplane, a balloon, or a satellite). For example, the electronic device may be a terminal, a base station, or the like. Currently, the terminal includes but is not limited to a computer, a mobile phone (mobile phone), a tablet computer, a notebook computer, a palmtop computer, a mobile internet device (mobile internet device, MID), a wearable device (for example, a smart watch, a smart band, or a pedometer), a vehicle-mounted device (for example, an automobile, a bicycle, an electric vehicle, an airplane, a ship, a train, or a high-speed train), a virtual reality (virtual reality, VR) device, an augmented reality (augmented reality, AR) device, a terminal in industrial control (industrial control), a smart home device (for example, a refrigerator, a television, an air conditioner, or an electricity meter), an intelligent robot, a workshop device, a terminal in self driving (self driving), a terminal in remote medical surgery (remote medical surgery), a terminal in a smart grid (smart grid), a terminal in transportation safety (transportation safety), a terminal in a smart city (smart city), a terminal in a smart home (smart home), a flight device (for example, an intelligent robot, a hot air balloon, an unmanned aerial vehicle, or an aircraft), and the like.

FIG. 2a is a schematic diagram of a structure of an apparatus with a forward-reverse insertion interface according to an embodiment of this application. The apparatus may be the electronic device described above, a chip used in the electronic device, or the like. As shown in FIG. 2a, the forward-reverse insertion interface includes a first auxiliary channel CH1, a second auxiliary channel CH2, and a control circuit CTRL coupled to the first auxiliary channel CH1 and the second auxiliary channel CH2. The first auxiliary channel CH1 includes a first switch selection circuit SW1 coupled to a first node A. The second auxiliary channel CH2 includes a second switch selection circuit SW2 coupled to a second node. The second switch selection circuit SW2 and the first switch selection circuit SW1 are structurally asymmetrical. In FIG. 2a, the structural asymmetry of the two switch selection circuits is represented in different shapes. The control circuit CTRL is configured to control switching of the first switch selection circuit SW to change an electrical parameter of the first node, and control switching of the second switch selection circuit SW to change an electrical parameter of the second node B. Switching states of the first switch selection circuit SW1 and the second switch selection circuit SW2 are consistent.

Optionally, the second switch selection circuit SW2 and the first switch selection circuit SW1 being structurally asymmetric includes: A first end 1 of the first switch selection circuit SW1 is coupled to the first node A, a second end 2 of the first switch selection circuit SW1 is coupled to a first voltage end V_{P} by using a first pull-up resistor R11, and a third end 3 of the first switch selection circuit SW1 is coupled to a grounding end GND by using a first pull-down resistor R12. A first end 1 of the second switch selection circuit SW2 is coupled to the second node B, a second end 2 of the second switch selection circuit SW2 is coupled to the first voltage end V_{P} by using a second pull-up resistor R21, and a third end 3 of the second switch selection circuit SW2 is suspended. A resistance value of the second pull-up resistor R21 may be equal to a resistance value of the first pull-up resistor R11.

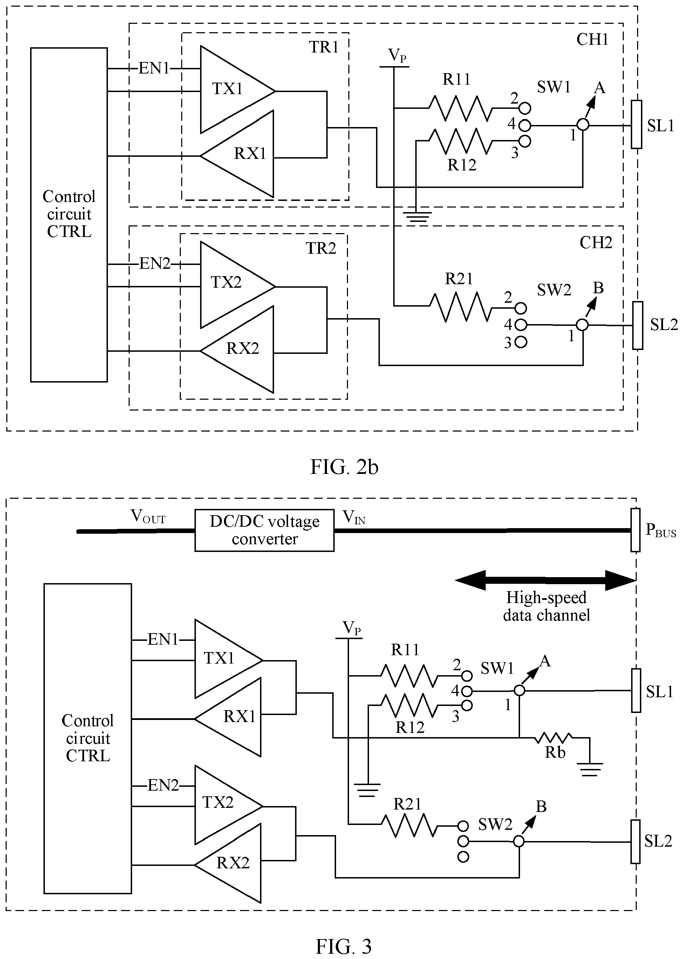

With reference to FIG. 2a, FIG. 2b shows a schematic diagram of a structure of another apparatus with a forward-reverse insertion interface according to an embodiment of this application. The apparatus may be the electronic device described above, a chip used in the electronic device, or the like. As shown in FIG. 2b, the forward-reverse insertion interface includes a first auxiliary channel CH1, a second auxiliary channel CH2, and a control circuit CTRL coupled to the first auxiliary channel CH1 and the second auxiliary channel CH2.

The first auxiliary channel CH1 includes a first transceiver TR1, a first switch selection circuit SW1, a first pull-up resistor R11, and a first pull-down resistor R12. A first end of the first transceiver TR1 and a first end 1 of the first switch selection circuit SW1 are both coupled to a first node A. A second end 2 of the first switch selection circuit SW1 is coupled to a first voltage end V_{P} by using the first pull-up resistor R11. A third end 3 of the first switch selection circuit SW1 is coupled to a grounding end GND by using the first pull-down resistor R12. The first transceiver TR1 may include a first receiver RX1 and a first transmitter TX1. A receiving end of the first receiver RX1 and a transmitting end of the first transmitter TX1 are coupled to serve as the first end of the first transceiver TR1. In addition, the transmitting end of the first receiver RX1 and the receiving end of the first transmitter TX1 may be coupled as a second end of the first transceiver TR1. The second end of the first transceiver TR1 may be coupled to the control circuit CTRL, or may be connected to a module that is configured to process or store data and that is in the apparatus. In FIG. 2b, that the second end of the first transceiver TR1 is coupled to the control circuit CTRL is used as an example for description. Optionally, the first node A may be coupled to a first pin SL1. The first pin SL1 may be a pin of the first auxiliary channel CH1 for receiving or sending data. The first pin SL1 may be coupled to a corresponding pin on a connector corresponding to the forward-reverse insertion interface.

The second auxiliary channel CH2 may further include a second transceiver TR2, a second switch selection circuit SW2, and a second pull-up resistor R21. A first end of the second transceiver TR2 and a first end 1 of the second switch selection circuit SW2 are both coupled to a second node B. A second end 2 of the second switch selection circuit SW2 is coupled to a first voltage end V_{P} by using the second pull-up resistor R21. A third end 3 of the second switch selection circuit SW2 is suspended. A resistance value of the second pull-up resistor R21 may be equal to a resistance value of the first pull-up resistor R11. The second transceiver TR2 may include a second receiver RX2 and a second transmitter TX2. A receiving end of the second receiver RX2 and a transmitting end of the second transmitter TX2 are coupled to serve as the first end of the second transceiver TR2. In addition, a transmitting end of the second receiver RX2 and a receiving end of the second transmitter TX2 may also be coupled as a second end of the second transceiver TR2. The second end of the second transceiver TR2 may be coupled to the control circuit CTRL, or may also be connected to the module that is configured to process or store the data and that is in the apparatus. In FIG. 2b, that the second end of the second transceiver TR2 is coupled to the control circuit CTRL is used as an example for description. Optionally, the second node B may be coupled to the first pin SL2. The second pin SL2 may be a pin of the second auxiliary channel CH2 for receiving or sending data. The second pin SL2 may be coupled to a corresponding pin on a connector corresponding to the forward-reverse insertion interface.

The control circuit CTRL is configured to control switching between the first switch selection circuit SW1 and the second switch selection circuit SW2. Switching states of the first switch selection circuit SW1 and the second switch selection circuit SW2 are consistent. For example, the control circuit CTRL may simultaneously control, based on a specific time sequence, the first end 1 of the first switch selection circuit SW1 and the first end 1 of the second switch selection circuit SW2 to be switched and connected to the respective second ends 2 or the respective third ends 3, so that the first switch selection circuit SW1 and the second switch selection circuit SW2 are both in a pull-up state, or the first switch selection circuit SW1 is in a pull-down state, and the second switch selection circuit SW2 is in a suspended state. When the first end 1 of the first switch selection circuit SW1 is connected to the second end 2 of the first switch selection circuit SW1, and the first end 1 of the second switch selection circuit SW2 is connected to the second end 2 of the second switch selection circuit SW2, the first switch selection circuit SW1 and the second switch selection circuit SW2 are both in the pull-up state. When the first end 1 of the first switch selection circuit SW 1 is connected to the third end 3 of the first switch selection circuit SW1, and the first end 1 of the second switch selection circuit SW2 is connected to the third end 3 of the second switch selection circuit SW2, the first switch selection circuit SW1 is in a pull-down state, and the second switch selection circuit SW2 is in the suspended state.

Optionally, both the first switch selection circuit SW1 and the second switch selection circuit SW2 may further have a fourth end 4 in a floating state (which may also be referred to as suspended state). Correspondingly, the first end 1 of the first switch selection circuit SW1 may be connected to the fourth end 4 of the first switch selection circuit SW 1 by default. The first end 1 of the second switch selection circuit SW2 may be connected to the fourth end 4 of the second switch selection circuit SW2 by default. In this case, both the first switch selection circuit SW1 and the second switch selection circuit SW2 are in the floating state.

In the apparatus provided in embodiments of this application, the forward-reverse insertion interface has two independent auxiliary channels. The first switch selection circuit SW1 and the second switch selection circuit SW2 in the two auxiliary channels are structurally asymmetric, in other words, the two auxiliary channels are asymmetrically set. In this way, in an inserted state of the forward-reverse insertion interface, the electrical parameter (for example, a voltage or a current) of the first node A is different from the electrical parameter of the second node B, so that forward insertion and reverse insertion of the forward-reverse insertion interface can be effectively distinguished. In addition, the asymmetrical setting may enable the two auxiliary channels in the forward-reverse insertion interface to be respectively connected to two auxiliary channels in an interface of a peer device through two conducting wires in a cable. In this way, both the two auxiliary channels are in a connected state when the forward-reverse insertion interface is in the inserted state. In other words, both the two auxiliary channels may be used to transmit information simultaneously. Therefore, in the inserted state, a full-duplex transmission path may be established based on the two auxiliary channels, to improve transmission efficiency of the auxiliary channels. However, an auxiliary channel in the forward-reverse insertion interface provided in a conventional technology has two groups of completely symmetrical pins, so that the auxiliary channel can work in either a forward insertion state or a reverse insertion state. However, regardless of forward insertion or reverse insertion, only one group of pins are used to transmit data, and the other group of pins are not used to transmit data. As a result, the transmission efficiency is low.

In a possible implementation, the control circuit CTRL is further configured to control a transmitting and receiving status of the first transceiver TR1 and a transmitting and receiving status of the second transceiver TR2. The transmitting and receiving status of the first transceiver TR1 and the transmitting and receiving status of the second transceiver TR2 are different. The transmitting and receiving status of the first transceiver TR1 is a transmitting and receiving status of the first auxiliary channel CH1, and the transmitting and receiving status of the second transceiver TR2 is a transmitting and receiving status of the second auxiliary channel CH2. Therefore, the foregoing description may also be replaced with: The control circuit CTRL is further configured to control the transmitting and receiving status of the first auxiliary channel CH1 and the transmitting and receiving status of the second auxiliary channel CH2.

The transmitting and receiving status of the first transceiver TR1 and the transmitting and receiving status of the second transceiver TR2 may be receiving states by default. In other words, the receiving states of the first transceiver TR1 and the second transceiver TR2 are connected states by default, and the data may be received. The control circuit CTRL may be configured to control the first transceiver TR1 to be in a transmitting state (in this case, the second transceiver TR2 is in the receiving state), or control the second transceiver TR2 to be in the transmitting state (in this case, the first transceiver TR1 is in the receiving state.), so that the transmitting and receiving status of the first transceiver TR1 and the transmitting and receiving status of the second transceiver TR2 are different.

For example, the control circuit CTRL may be configured to send a first enable signal EN1 to the first transmitter TX1 in the first transceiver TR1. When the first enable signal EN1 is effective (for example, effective at a high level and ineffective at a low level), the first transmitter TX1 may be enabled to work, to set the first transceiver TR1 to the transmitting state. Similarly, the control circuit CTRL may be further configured to send a second enable signal EN2 to the second transmitter TX2 in the second transceiver TR2. When the second enable signal EN2 is effective (for example, effective at a high level and ineffective at a low level), the second transmitter TX2 may be enabled to work, to set the second transceiver TR2 to the transmitting state.

Further, the control circuit CTRL is further configured to: obtain a voltage of the first node A and a voltage state of the second node B; determine a status of the forward-reverse insertion interface based on the voltage of the first node A or the voltage state of the second node B; and/or control the transmitting and receiving status of the first transceiver TR1 and the transmitting and receiving status of the second transceiver TR2 based on a voltage of the first node A or a voltage of the second node B.

Optionally, the control circuit CTRL may be a digital circuit. The apparatus may further include an analog circuit that serves as a detection circuit. The detection circuit may be configured to detect the voltage of the first node A and the voltage of the second node B, and send the detected voltage of the first node A and the detected voltage state of the second node B to the control circuit CTRL. The detection circuit may be integrated into the forward-reverse insertion interface, or may not be integrated into the forward-reverse insertion interface. This is not specifically limited in this embodiment of this application.

It should be noted that a detailed process that the control circuit CTRL controls the transmitting and receiving status of the first transceiver TR1 and the transmitting and receiving status of the second transceiver TR2 based on the voltage of the first node A or the voltage of the second node B, and determines the status of the forward-reverse insertion interface based on the voltage of the first node A or the voltage of the second node B is related to a type of the apparatus and a type of an apparatus connected to the apparatus. The following separately performs detailed description by using examples in which types of the apparatus are a powered device and power sourcing equipment. The powered device may also be referred to as a sink (sink) device. In other words, the device does not have a power supply capability, and needs to be connected to another device (for example, the power sourcing equipment) to supply power to the device. The power sourcing equipment may also be referred to as a source (source) device. The device has an external power supply and a power supply capability, and can supply power to another device (for example, the powered device) by using a connector on the device.

Type 1: The type of the apparatus is the powered device. As shown in FIG. 3, the apparatus may further include a direct current/direct current (direct current to direct current, DC/DC) voltage converter, and a marker resistor Rb coupled between the first node A and the grounding end GND. The marker resistor Rb may be integrated in the forward-reverse insertion interface or the apparatus. For example, the marker resistor Rb may be integrated on a circuit board of the apparatus.

An input end V_{IN} of the DC/DC voltage converter is configured to receive an externally input direct current voltage. An output end V_{OUT} of the DC/DC voltage converter is configured to supply power to the apparatus. For example, an output voltage is a power supply voltage of the apparatus. For example, the output end of the DC/DC voltage converter may be configured to supply power to the control circuit CTRL. The output end of the DC/DC voltage converter may further be coupled to another module that needs power supply in the apparatus, to provide direct or indirect power supply to the another module. Optionally, a connector corresponding to the forward-reverse insertion interface may further include a power supply pin P_{BUS}. The input end V_{IN} of the DC/DC voltage converter may be coupled to the power supply pin P_{BUS}. Therefore, the externally input direct current voltage may be transmitted to the input end V_{IN} of the DC/DC voltage converter via the power supply pin P_{BUS}.

In addition, a resistance value of the marker resistor Rb may be related to a required voltage of the apparatus. Different required voltages may correspond to the marker resistor Rb with different resistance values. For example, a correspondence between the resistance value of the marker resistor Rb and the required voltage of the apparatus may be shown in Table 1. Table 1 further shows a resistance accuracy of the marker resistor Rb and a voltage range corresponding to the required voltage.

**Table 1**

| Resistance value of Rb | Resistance accuracy of Rb | Required voltage of the apparatus | Corresponding voltage range |
|---|---|---|---|
| 100 KΩ | 5% | 5 V | 4.75 V to 5.25 V |
| 200 KΩ | 5% | 12 V | 11.4 V to 12.6 V |
| 500 KΩ | 5% | 20 V | 19 V to 21 V |

It should be noted that Table 1 is merely an example, and does not constitute a limitation on this embodiment of this application. The resistance value or the resistance accuracy of the marker resistor Rb may alternatively be another value. The required voltage of the apparatus may further include more or higher values of voltages. This is not specifically limited in this embodiment of this application.

Specifically, when the apparatus is the powered device, the first end 1 of the first switch selection circuit SW1 is connected to the fourth end 4 of the first switch selection circuit SW1 by default, and the first end 1 of the second switch selection circuit SW2 is connected to the fourth end 4 of the second switch selection circuit SW2 by default. The control circuit CTRL may determine that the forward-reverse insertion interface is in the inserted state after the apparatus is powered. Then, the control circuit CTRL does not need to detect that the forward-reverse insertion interface is in a forward insertion state or in a reverse insertion state, and only needs to control the transmitting and receiving status of the first transceiver TR1 and the transmitting and receiving status of the second transceiver TR2. The forward insertion state may mean that the first auxiliary channel CH1 in the apparatus is connected to the first auxiliary channel CH1 in the peer device, and the second auxiliary channel CH2 in the apparatus is connected to the second auxiliary channel CH2 in the peer device. The reverse insertion state may mean that the first auxiliary channel CH1 in the apparatus is connected to the second auxiliary channel CH2 in the peer device, and the second auxiliary channel CH2 in the apparatus is connected to the first auxiliary channel CH1 in the peer device. In a possible embodiment, the control circuit CTRL is further configured to control the second transceiver TR2 to be in the transmitting state. For example, the control circuit CTRL sends an effective second enable signal EN2 to the second transmitter TX2 in the second transceiver TR2, to set the second transceiver TR2 to the transmitting state. In this case, the first transceiver TR1 is in the receiving state. Therefore, the apparatus may receive the data via the first receiver RX1 in the first auxiliary channel CH1, and simultaneously send the data via the second transmitter RX2 in the second auxiliary channel CH2.

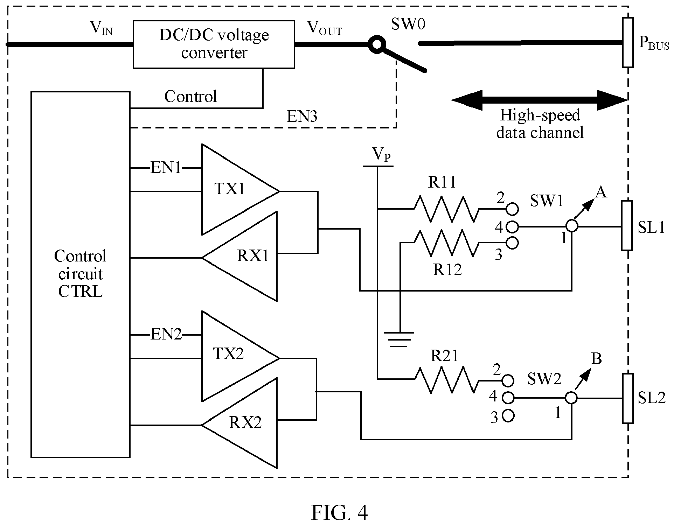

Type 2: The apparatus is the power sourcing equipment, and needs an external power adapter to provide power. As shown in FIG. 4, the apparatus may further include a DC/DC voltage converter and a switch SW0. The switch SW0 has a turn-off state and a turn-on state. An input end V_{IN} of the DC/DC voltage converter is configured to receive a first direct current voltage. The first direct current voltage may be a voltage provided by a power adapter or a voltage obtained after the voltage (that is, a voltage provided by the power adapter) is converted. An output end V_{OUT} of the DC/DC voltage converter is coupled to a first end of the switch SW0. A second end of the switch SW0 is coupled to a power supply pin P_{BUS}. The control circuit CTRL may be directly or indirectly powered by the voltage provided by the power adapter. This is not specifically limited in this embodiment of this application.

Specifically, when the type of the apparatus is the power sourcing equipment, the control circuit CTRL may further detect the status of the forward-reverse insertion interface, for example, detect whether the forward-reverse insertion interface is inserted, and in the inserted state and when the first switch selection circuit SW1 and the second switch selection circuit SW2 are both in the pull-up state, detect that the forward-reverse insertion interface is in the forward insertion state or the reverse insertion state. A specific process is as follows.

A process that the control circuit CTRL detects whether the forward-reverse insertion interface is inserted may include: if the voltage of the first node A or the voltage of the second node B is within a preset voltage range and duration of being within the preset voltage range is greater than first preset time, for example, the preset voltage range is [0.99 V, 1.21 V], and the first preset time is 5 milliseconds, and if the voltage of the first node A or the voltage of the second node B is 1.1 V and the duration is greater than 5 milliseconds, determining that the forward-reverse insertion interface is in the inserted state; if the voltage of the first node or the voltage of the second node is converted from the preset voltage range to a pull-up voltage or a pull-down voltage and duration of being converted to the pull-up voltage or the pull-down voltage is greater than second preset time, for example, the preset voltage range is [0.99 V; 1.21 V], the second preset time is 5 milliseconds, the pull-up voltage is 3.3 V, and the pull-down voltage is 0 V, and if the voltage of the first node A is converted from 1.1 V to 3.3 V and the duration is greater than 5 milliseconds, or the voltage of the second node B is converted from 1.1 V to 0 V and the duration is greater than 5 milliseconds, determining that the forward-reverse insertion interface is removed; and if the voltage of the first node A or the voltage of the second node B is switched between the pull-up voltage and the pull-down voltage, for example, the pull-up voltage is 3.3 V and the pull-down voltage is 0 V, and if the voltage of the first node A is switched between 3.3 V and 0 V, or the voltage of the second node B is switched between 3.3 V and 0 V, determining that the forward-reverse insertion interface is in an unattached state. For example, if the pull-up voltage is represented as V_{PH}, the pull-down voltage is represented as V_{PL}, and a voltage within the preset voltage range is represented as V_{PM}, theoretical voltages and actual voltages of the voltage V_{A} of the first node A and the voltage V_{B} of the second node in the inserted state and in the removed state may be shown in Table 2. The theoretical voltage is a voltage in an expected state, and the actual voltage is a voltage in an actual state. V_{Floating} in Table 2 represents a theoretical voltage of the second node B when a first end 1 of the second switch selection circuit SW2 is connected to a third end 3 (which is suspended) of the second switch selection circuit SW2.

**Table 2**

| Status of switch selection circuit | Inserted state | | Removed state | |
|---|---|---|---|---|
| | Theoretical voltage | Actual voltage | Theoretical voltage | Actual voltage |
| SW1 and SW2 are both in a pull-up state | V_{A}= V_{PH} | V_{A}= V_{PM} | V_{A}= V_{PM} | V_{A} = V_{PH} |
| | V_{B}= V_{PH} | V_{B}= V_{PH} | V_{B}= V_{PH} | V_{B}= V_{PH} |
| | V_{A}= V_{PH} | V_{A}= V_{PH} | V_{A}= V_{PH} | V_{A}= V_{PH} |
| | V_{B}= V_{PH} | V_{B}= V_{PM} | V_{B}= V_{PM} | V_{B}= V_{PH} |
| SW1 is in a pull-down state, and SW2 is in a suspended state | V_{A}= V_{PH} | V_{A}= V_{PM} | V_{A}= V_{PM} | V_{A} = V_{PH} |
| | V_{B}= V_{Floating} | V_{B}= V_{PH} | V_{B}= V_{PH} | V_{B} = V_{Floating} |
| | V_{A}= V_{PL} | V_{A}= V_{PH} | V_{A}= V_{PH} | V_{A}= V_{PL} |
| | V_{B}= V_{Floating} | V_{B}= V_{PM} | V_{B}= V_{PM} | V_{B}= V_{Floating} |

In addition, when determining that the forward-reverse insertion interface is in the inserted state, the control circuit CTRL may control the first end 1 of the first switch selection circuit SW1 to be connected to the second end 2, and control the first end 1 of the second switch selection circuit SW2 to be connected to the second end 2. In other words, both the first switch selection circuit SW1 and the second switch selection circuit SW2 are fixed in the pull-up state. In this case, the control circuit CTRL determines, based on the voltage of the first node A or the voltage of the second node B, the forward insertion state or the reverse insertion state of the forward-reverse insertion interface. Specifically, the control circuit CTRL is further configured to: if the voltage of the first node A is within the preset voltage range and the duration of being within the preset voltage range is greater than the first preset time, for example, the preset voltage range is [0.99 V to 1.21 V], and the first preset time is 5 seconds, and if the voltage of the first node A is 1.1 V and the duration is greater than 5 seconds, determine that the forward-reverse insertion interface is in the forward insertion state; and if the voltage of the second node B is within the preset voltage range and the duration is greater than the first preset time, for example, the preset voltage range is [0.99 V to 1.21 V], and the first preset time is 5 seconds, and if the voltage of the second node B is 1.1 V, and the duration is greater than 5 seconds, determine that the forward-reverse insertion interface is in the reverse insertion state.

In addition, that the control circuit CTRL may further control the transmitting and receiving statuses of the first transceiver TR1 and the second transceiver TR2 based on the forward insertion state or the reverse insertion state of the forward-reverse insertion interface specifically includes: when the forward-reverse insertion interface is in the forward insertion state, controlling the first transceiver TR1 to be in the transmitting state, where for example, the control circuit CTRL sends an effective first enable signal EN1 to the first transmitter TX1 in the first transceiver TR1, to set the first transceiver TR1 to the transmitting state, and in this case, the second transceiver TR2 is in the receiving state; and when the forward-reverse insertion interface is in the reverse insertion state, controlling the second transceiver TR2 to be in the transmitting state, where for example, the control circuit CTRL sends an effective second enable signal EN2 to the second transmitter TX2 in the second transceiver TR2, to set the second transceiver TR2 to the transmitting state, and in this case, the first transceiver TR1 is in the receiving state. In this way, one of the first auxiliary channel CH1 and the second auxiliary channel CH2 in the forward-reverse insertion interface is in the transmitting state, and the other is in the receiving state, so that data receiving and sending can be simultaneously implemented.

It should be noted that the first preset time, the second preset time, and the preset voltage range may be preset. This is not specifically limited in this embodiment of this application. In addition, that duration of a voltage is greater than the preset time may also be replaced with that the voltage remains stable.

Further, when the apparatus serves as the power sourcing equipment to supply power to another device, the control circuit CTRL may turn on the switch SW0. For example, the control circuit CTRL may send an effective third enable signal EN3 (for example, effective at a high level and ineffective at a low level) to the switch SW0 to turn on the switch SW0, so that an output voltage of the DC/DC voltage converter is output from the power supply pin P_{BUS}.

In a possible embodiment, the control circuit CTRL may be further configured to adjust the output voltage of the DC/DC voltage converter. Optionally, the control circuit CTRL is further configured to: when the forward-reverse insertion interface is in the forward insertion state, determine a voltage requirement of a connected device based on the voltage of the first node A, and further adjust the output voltage of the DC/DC voltage converter; and when the forward-reverse insertion interface is in the reverse insertion state, determine the voltage requirement of the connected device based on the voltage of the second node B, and further adjust the output voltage of the DC/DC voltage converter. For example, if the voltage of the first node A in the forward insertion state or the voltage of the second node B in the reverse insertion state is referred to as a first marker voltage, the control circuit CTRL may obtain, from a preset voltage relationship, a first output voltage corresponding to the first marker voltage, and adjust the output voltage of the DC/DC voltage converter to be equal to the first output voltage. The preset voltage relationship indicates a correspondence between a plurality of marker voltages and a plurality of output voltages.

For example, the preset voltage relationship may be shown in Table 3. Table 3 shows output voltages corresponding to different marker voltages, and a minimum value, a typical value, and a maximum value of the marker voltage corresponding to a same output voltage. It should be noted that Table 3 is merely an example, and does not constitute a limitation on this embodiment of this application. The preset voltage relationship may further include more marker voltages, more or higher values of the output voltages, and the like. This is not specifically limited in this embodiment of this application.

**Table 3**

| Marker voltage (unit: V) | | | Output voltage (unit: V) | Description |
|---|---|---|---|---|
| Minimum value | Typical value | Maximum value | | |
| 0.99 | 1.1 | 1.21 | 0 | Two power sourcing equipments are interconnected |
| 1.48 | 1.65 | 1.82 | 5 | A power sourcing equipment and a 5 V powered device are interconnected |
| 1.98 | 2.2 | 2.42 | 12 | A power sourcing equipment and a 12 V powered device are interconnected |
| 2.46 | 2.74 | 3.01 | 20 | A power sourcing equipment and a 20 V powered device are interconnected |

Optionally, the control circuit CTRL may further determine a type of the connected device. In a possible embodiment, the control circuit CTRL is further configured to: when determining that the first output voltage corresponding to the first marker voltage is 0 V, determine that the type of the connected device is the power sourcing equipment, in other words, the apparatus does not need to supply power to the connected device; and when determining that the first output voltage corresponding to the first marker voltage is not 0 V and is within a marker voltage range, determine that the type of the connected device is the powered device. In this way, the output voltage of the DC/DC voltage converter can be adjusted based on the foregoing descriptions. Table 2 is used as an example. If the first output voltage determined by the control circuit CTRL is 5 V, 12 V, or 20 V, it indicates that the device connected to the apparatus is the powered device. Therefore, the control circuit CTRL may adjust, based on the foregoing descriptions, the output voltage of the DC/DC voltage converter to be 5 V, 12 V, or 20 V If the first output voltage determined by the control circuit CTRL is 0 V, it indicates that the device connected to the apparatus is the power sourcing equipment. Therefore, the control circuit CTRL does not need to adjust the output voltage of the DC/DC voltage converter. In this case, the switch SW0 may remain in the turn-off state.

Further, when the apparatus determines that the connected device is the power sourcing equipment, in other words, the two power sourcing equipments are interconnected, after detecting that the forward-reverse insertion interface is in the inserted state, the power sourcing equipment connected to the apparatus controls, in a forward-reverse insertion interface of the power sourcing equipment, a first end 1 of a first switch selection circuit SW1 to be connected to a third end 3, and controls a first end 1 of a second switch selection circuit SW2 to be connected to a third end 3. In other words, the first switch selection circuit SW1 is fixed in the pull-down state, and the second switch selection circuit SW2 is fixed in the suspended state. In this case, the power sourcing equipment connected to the apparatus may not need to detect that the forward-reverse insertion interface of the power sourcing equipment connected to the apparatus is in the forward insertion state or in the reverse insertion state, and only needs to control transmitting and receiving statuses of a first transceiver TR1 and a second transceiver TR2. For example, the power sourcing equipment connected to the apparatus may control the second transceiver TR2 to be in the transmitting state. In this case, the first transceiver TR1 is in the receiving state. Therefore, the power sourcing equipment connected to the apparatus may receive data via a first receiver RX1 in a first auxiliary channel CH1, and simultaneously send data via a second transmitter TX2 in a second auxiliary channel CH2.

It should be noted that, when the type of the apparatus is the type 1 or the type 2 described above, the forward-reverse insertion interface may further include a high-speed data transmit and receive channel, that is, a channel for transmitting high-speed data. For example, the high-speed data may include audio data, video data, storage data, and the like. The high-speed data is relative to low-speed data transmitted in an auxiliary channel. For example, a transmission rate of the high-speed data may reach gigabit per second, and a transmission rate of the low-speed data may be several megabits per second or dozens of megabits per second.

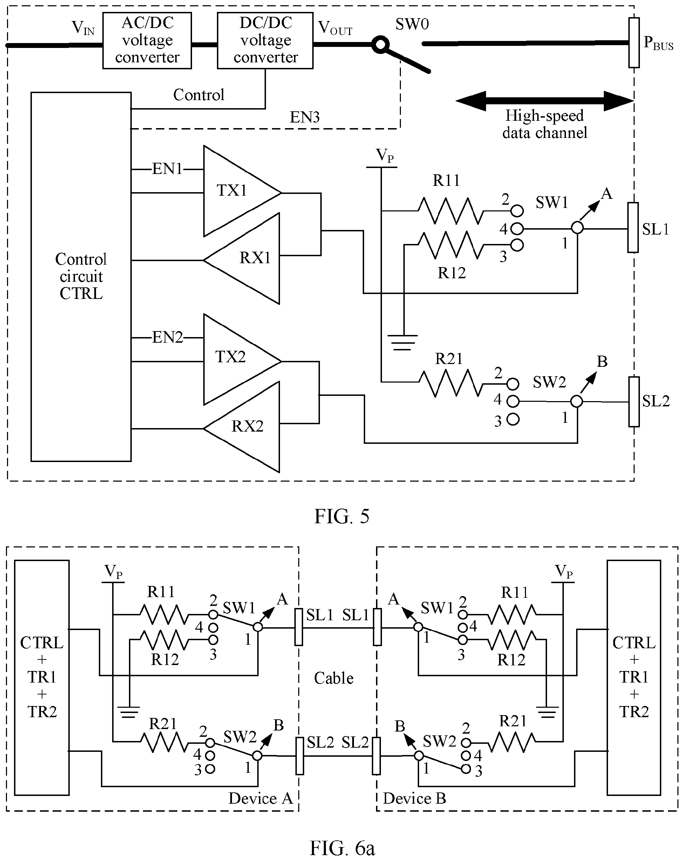

Type 3: The apparatus is the power sourcing equipment, and is a power adapter in the power sourcing equipment. As shown in FIG. 5, the apparatus may further include an AC/DC voltage converter and the switch SW0. The switch SW0 has the turn-off state and the turn-on state. An input end V_{IN} of the AC/DC voltage converter is configured to receive an alternating current voltage. An output end of the AC/DC voltage converter is coupled to a first end of the switch SW0. A second end of the switch SW0 is configured to output a direct current voltage. Further, the apparatus may further include a DC/DC voltage converter coupled between the AC/DC voltage converter and the switch SW0. An input end of the DC/DC voltage converter may be coupled to the output end of the AC/DC voltage converter. An output end V_{OUT} of the DC/DC voltage converter is coupled to the first end of the switch SW0. The DC/DC voltage converter may implement conversion of a direct current voltage. For example, a first direct current voltage output by the AC/DC voltage converter is converted into a second direct current voltage. The control circuit CTRL may be directly or indirectly powered by a direct current voltage output by the AC/DC voltage converter. For example, a power supply end VCC of the control circuit CTRL may be coupled to the output end of the AC/DC voltage converter, coupled to another module of the apparatus, or the like. This is not specifically limited in this embodiment of this application. In FIG. 5, an example in which the apparatus includes both the AC/DC voltage converter and the DC/DC voltage converter, and the power supply end VCC of the control circuit CTRL is coupled to the output end of the AC/DC voltage converter is used for description.

Specifically, when the type of the apparatus is the power sourcing equipment, the control circuit CTRL may control both the first switch selection circuit SW1 and the second switch selection circuit SW2 to be in the pull-up state, detect the status of the forward-reverse insertion interface and a type of a connected device, control the transmitting and receiving statuses of the first transceiver TR1 and the second transceiver TR2, and adjust the output voltage of the DC/DC voltage converter. Related descriptions of detecting the status of the forward-reverse insertion interface and the type of the connected device, controlling the transmitting and receiving statuses of the first transceiver TR1 and the second transceiver TR2, and adjusting the output voltage of the DC/DC voltage converter are consistent with related descriptions of the type 2. For details, refer to the descriptions of the type 2. Details are not described herein again in this embodiment of this application.

It should be noted that, when the apparatus is the power adapter in the power sourcing equipment, after powered on, the control circuit CTRL in the forward-reverse insertion interface may fix the first switch selection circuit SW1 and the second switch selection circuit SW2 in the pull-up state, control the switch SW0 to be turned on, and the like. In addition, when the apparatus is the power adapter in the power sourcing equipment, the forward-reverse insertion interface may not include the high-speed data transmit and receive channel.

For ease of understanding, the following separately describes technical solutions provided in embodiments of this application by using an example in which a device A and a device B each with a forward-reverse insertion interface are interconnected through cables. The device A may be the power sourcing equipment, and the device B may be the powered device or the power sourcing equipment. Conversely, the device B may be the power sourcing equipment, and the device A may be the powered device or the power sourcing equipment.

FIG. 6a shows a schematic diagram of a connection between the device A and the device B that are in a forward insertion state. That the device A and the device B are in the forward insertion state specifically means that a first pin SL1 of the device A is coupled to a first pin SL1 of the device B, and a second pin SL2 of the device A is coupled to a second pin SL2 of the device B. Further, when the device A and the device B are in the forward insertion state, both a first switch selection circuit SW1 and a second switch selection circuit SW2 in the device A may be in a pull-up state, a first switch selection circuit SW1 in the device B may be in a pull-down state, and a second switch selection circuit SW2 may be in a suspended state (in this case, the device B may be the power sourcing equipment), or both the first switch selection circuit SW1 and the second switch selection circuit SW2 in the device B may be in a floating state (in this case, the device B may be the powered device). In FIG. 6a, that the first switch selection circuit SW1 in the device B is in the pull-down state, and the second switch selection circuit SW2 is in the suspended state is used as an example for description.

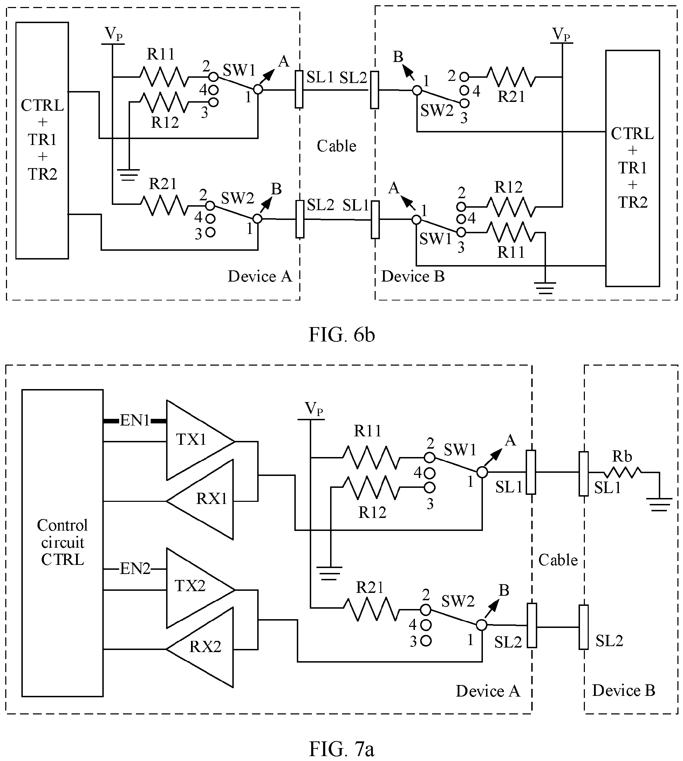

FIG. 6b shows a schematic diagram of a connection between the device A and the device B that are in a reverse insertion state. That the device A and the device B are in the reverse insertion state specifically means that a first pin SL1 of the device A is coupled to a second pin SL2 of the device B, and a second pin SL2 of the device A is coupled to a first pin SL1 of the device B. When the device A and the device B are in the reverse insertion state, both a first switch selection circuit SW1 and a second switch selection circuit SW2 in the device A may be in a pull-up state, a first switch selection circuit SW1 in the device B may be in a pull-down state, and a second switch selection circuit SW2 may be in a suspended state (in this case, the device B may be the power sourcing equipment, which is used as an example for description in FIG. 6b), or both the first switch selection circuit SW1 and the second switch selection circuit SW2 in the device B may be in a floating state (in this case, the device B may be the powered device).

FIG. 7a shows a schematic diagram of enabling a first transceiver TR1 by the device A. When the device A is connected to the device B, if both a first switch selection circuit SW1 and a second switch selection circuit SW2 in the device A are in a pull-up state and in a forward insertion state, a control circuit CTRL in the device A sends an effective first enable signal EN1 (represented by using a bold line) to a first transmitter TX1 in the first transceiver TR1, to set the first transceiver TR1 to a transmitting state. FIG. 7a shows only a partial structure of the device B.

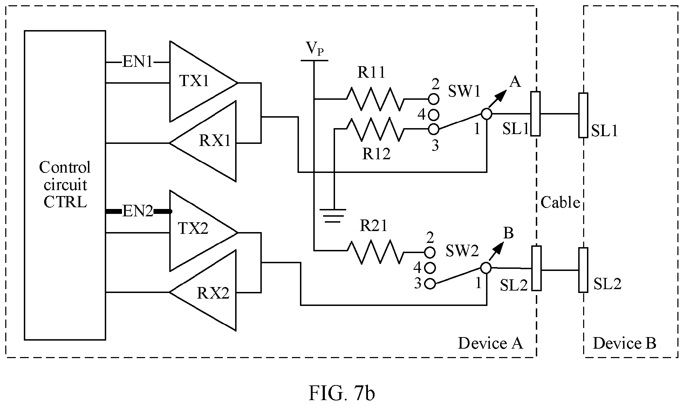

FIG. 7b shows a schematic diagram of enabling a second transceiver TR2 by the device A. When the device A is connected to the device B, if a first switch selection circuit SW1 in the device Ain a pull-down state, and a second switch selection is in a suspended state, a control circuit CTRL in the device A sends an effective second enable signal EN2 (represented by using a bold line) to a second transmitter TX2 in the second transceiver TR2, to set the second transceiver TR2 to a transmitting state. FIG. 7b does not shows a structure of the device B.

It should be noted that FIG. 6a to FIG. 7b show only partial structures of the device A and the device B, and do not show a voltage converter (for example, an AC/DC voltage converter or a DC/DC voltage converter), a switch SW0, a high-speed data transmit and receive channel, and/or the like.

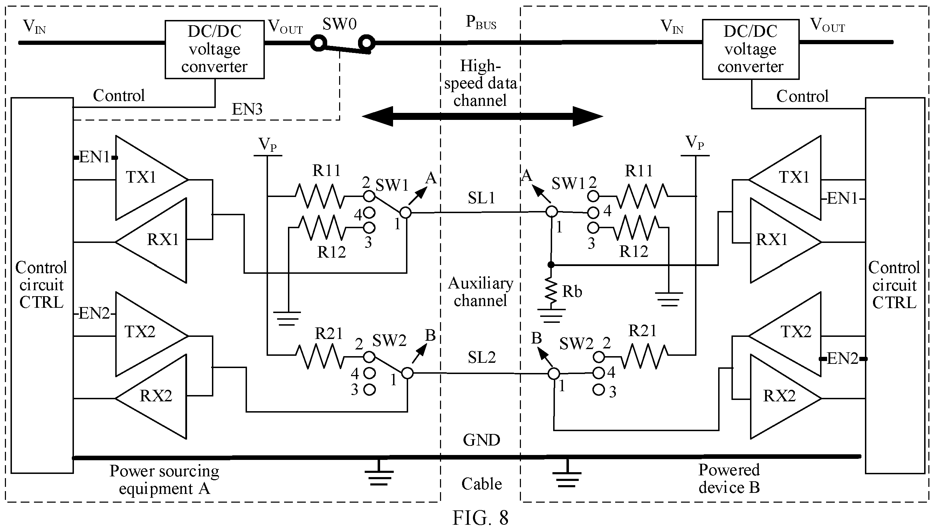

FIG. 8 shows a schematic diagram of a connection between power sourcing equipment A and a powered device B. The power sourcing equipment A may be power sourcing equipment that is not a power adapter. Specifically, the power sourcing equipment A may further include a DC/DC voltage converter and a switch SW0. The powered device B may further include a DC/DC voltage converter. Connectors and cables corresponding to forward-reverse insertion interfaces in the power sourcing equipment A and the powered device B may further include a power cable, a high-speed data channel, and a ground cable GND. Both a first switch selection circuit SW1 and a second switch selection circuit SW2 in the power sourcing equipment A are in a pull-up state. When the power sourcing equipment A and the powered device B are in a forward insertion state, a control circuit CTRL in the power sourcing equipment A may send an effective first enable signal EN1 (represented by using a bold line) to a first transmitter TX1 in a first transceiver TR1 of the power sourcing equipment A, to set the first transceiver TR1 to a transmitting state. Both a first switch selection circuit SW1 and a second switch selection circuit SW2 in the powered device B are in a floating state. A control circuit CTRL in the powered device B may send an effective second enable signal EN2 (represented by using a bold line) to a second transmitter TX2 in a second transceiver TR2 of the powered device B, to set the second transceiver TR2 to the transmitting state.

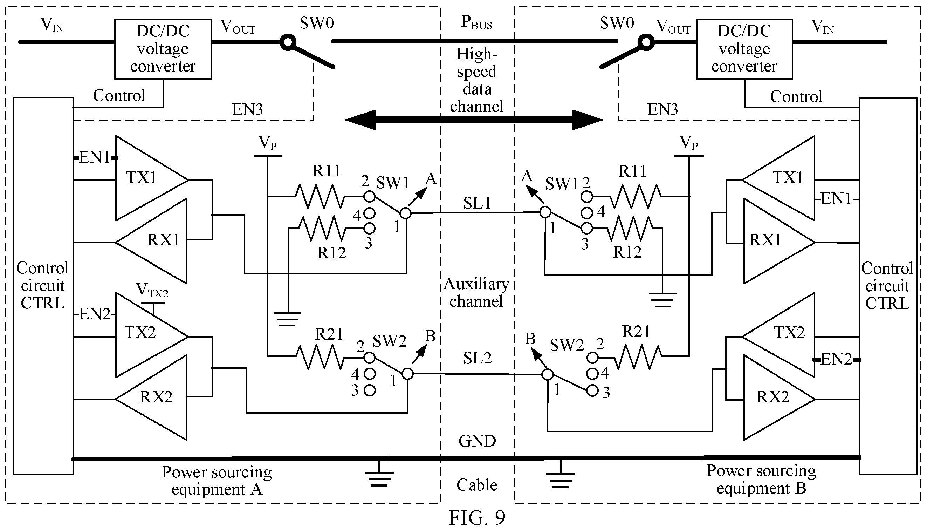

FIG. 9 shows a schematic diagram of a connection between power sourcing equipment A and power sourcing equipment B. Both the power sourcing equipment A and the power sourcing equipment B are power sourcing equipments that are not power adapters. Specifically, the power sourcing equipment A may further include a DC/DC voltage converter and a switch SW0. The power sourcing equipment B may further include a DC/DC voltage converter and a switch SW0. Connectors and cables corresponding to forward-reverse insertion interfaces in the power sourcing equipment A and the power sourcing equipment B may further include a high-speed data channel and a ground cable GND. When the power sourcing equipment A and the power sourcing equipment B are powered on and are interconnected, respective first switch selection circuits SW1 and respective second switch selection circuits SW2 may be separately switched between a second end 2 and a third end 3. After the power sourcing equipment A is connected to the power sourcing equipment B, the first switch selection circuit SW1 and the second switch selection circuit SW2 of one of the two equipments may be fixed in a pull-up state. The first switch selection circuit SW1 of the other device is fixed in a pull-down state, and the second switch selection circuit SW2 is fixed in a suspended state. An example in which both the first switch selection circuit SW1 and the second switch selection circuit SW2 in the power sourcing equipment A are in the pull-up state is used. When the power sourcing equipment A and the power sourcing equipment B are in a forward insertion state, a control circuit CTRL in the power sourcing equipment A may send an effective first enable signal EN1 (represented by using a bold line) to a first transmitter TX1 in a first transceiver TR1 of the power sourcing equipment A, to set the first transceiver TR1 to a transmitting state. An example in which the first switch selection circuit SW1 in the power sourcing equipment B in the pull-down state, and the second switch selection circuit SW2 in the power sourcing equipment B is in the suspended state is used. A control circuit CTRL in the power sourcing equipment B may send an effective second enable signal EN2 (represented by using a bold line) to a second transmitter TX2 in a second transceiver TR2 of the power sourcing equipment B, to set the second transceiver TR2 to a transmitting state.

It should be noted that an example in which the two switch selection circuits in the power sourcing equipment A are in the pull-up state, the first switch selection circuit SW1 in the power sourcing equipment B is in the pull-down state, and the second switch selection circuit SW2 in the power sourcing equipment B is in the suspended state is only used for description in FIG. 9. In actual application, the first switch selection circuit SW1 in the power sourcing equipment A is in the pull-down state, the second switch selection circuit SW2 in the power sourcing equipment A is in the suspended state, and both switch selection circuits in the power sourcing equipment B are in the pull-up state.

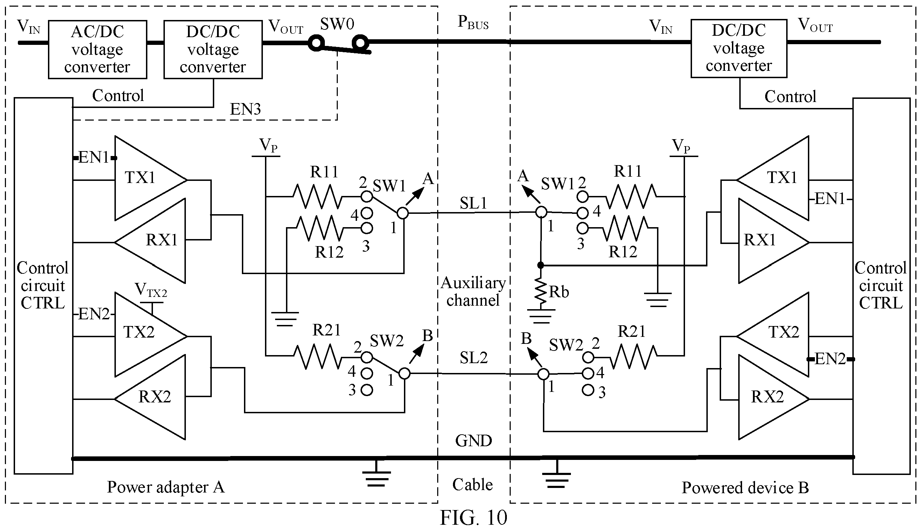

FIG. 10 shows a schematic diagram of a connection between a power adapter A and a powered device B. Specifically, the power adapter A may further include an AC/DC voltage converter, a DC/DC voltage converter, and a switch SW0. The powered device B further includes a DC/DC voltage converter. Connectors and cables corresponding to forward-reverse insertion interfaces in the power adapter A and the powered device B further include a ground cable GND. Both a first switch selection circuit SW1 and a second switch selection circuit SW2 in the power adapter A are in a pull-up state. When the power adapter A and the powered device B are in a forward insertion state, a control circuit CTRL in the power adapter A may send an effective first enable signal EN1 (represented by using a bold line) to a first transmitter TX1 in a first transceiver TR1 of the power adapter A, to set the first transceiver TR1 to a transmitting state. Both a first switch selection circuit SW1 and a second switch selection circuit SW2 in the powered device B are in a floating state. A control circuit CTRL in the powered device B may send an effective second enable signal EN2 (represented by using a bold line) to a second transmitter TX2 in a second transceiver TR2 of the powered device B, to set the second transceiver TR2 to the transmitting state.

It should be noted that FIG. 8 to FIG. 10 are all described by using an example in which the device A (including the power sourcing equipment A and the power adapter A) and the device B are in the forward insertion state. When the device A and the device B are in a reverse insertion state, a difference lies only in that the device A enables the second transceiver TR2 of the device A to be in the transmitting state.

In the apparatus with a forward-reverse insertion interface provided in embodiments of this application, regardless of whether the apparatus is the power sourcing equipment that is not the power adapter, or the power adapter, the following detection method may be used to detect a status of the forward-reverse insertion interface, control a transmitting and receiving status of the first transceiver TR1 or the second transceiver TR2, control an output voltage of the DC/DC voltage converter, a status of the switch SW0, and/or the like.

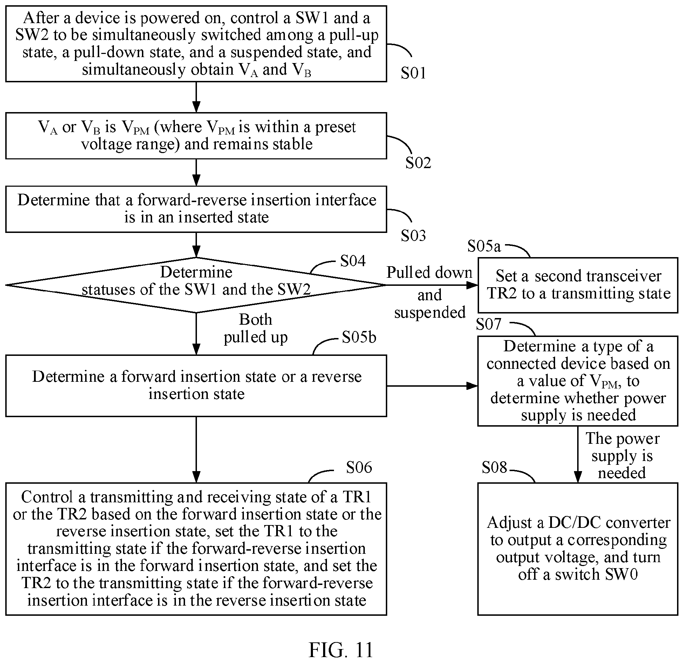

FIG. 11 is a schematic flowchart of a detection method according to an embodiment of this application. The method includes the following steps. S01: After a device is powered on, a control circuit CTRL switches, based on a preset time sequence, a first switch selection circuit SW1 and a second switch selection circuit SW2 to be simultaneously switched among a pull-up state, a pull-down state, and a suspended state (if the apparatus is a power adapter, the control circuit CTRL may control the first switch selection circuit SW1 and the second switch selection circuit SW2 to be fixed in the pull-up state), and simultaneously obtains a voltage V_{A} of a first node A and a voltage V_{B} of a second node B. S02: The voltage V_{A} of the first node A or the voltage V_{B} of the second node B is V_{PM} (where V_{PM} is within a preset voltage range) and remains stable. S03: Determine that a forward-reverse insertion interface is in an inserted state. S04: Determine statuses of the first switch selection circuit SW1 and the second switch selection circuit SW2, if the SW1 is in the pull-down state and the SW2 is in the suspended state, perform S05a, and if the SW1 and the SW2 are both in the pull-up state, perform S05b. S05a: If the SW1 is in the pull-down state and the SW2 is in the suspended state, set a second transceiver TR2 to a transmitting state, and in this case, skip determining a forward insertion state or a reverse insertion state. S05b: If both the SW1 and the SW2 are in the pull-up state, determine the forward insertion state or the reverse insertion state. S06: Control a transmitting and receiving status of a first transceiver TR1 or the second transceiver TR2 based on the forward insertion state or the reverse insertion state, if the forward-reverse insertion interface is in the forward insertion state, set the first transceiver TR1 to the transmitting state, and if the forward-reverse insertion interface is in the reverse insertion state, set the second transceiver TR2 to the transmitting state. S07: Determine a type of a connected device based on a value of V_{PM}, to determine whether power supply is needed, if the power supply is needed, perform S08, and if the power supply is not needed, this step is ended (in other words, a DC/DC voltage converter does not need to be controlled, and a switch SW0 may be in a turn-off state). S08: If the power supply is needed, adjust the DC/DC voltage converter to output a corresponding output voltage, and turn on the switch SW0. There may be no sequence between S06 and 507. In FIG. 11, that S06 is located before S07 is used as an example for description.

It should be noted that for detailed descriptions of steps SO1 to S08 in FIG. 11, refer to the foregoing related descriptions of the apparatus. Details are not described herein again in this embodiment of this application.

In this embodiment of this application, the forward-reverse insertion interface can implement full-duplex transmission. This greatly improves transmission efficiency of an auxiliary channel, greatly shortens time of information exchange between devices, and significantly facilitates link training, status management, control, and the like of high-speed data. In addition, the power sourcing equipment provided in this application may further supply power to another device that needs power, so that power supply interfaces of the device can be reduced. In addition, data transmission and a power supply capability can be implemented simultaneously by using the forward-reverse insertion interface. The power supply capability may be adjusted or set based on a requirement. In this way, power supply of some devices with high power consumption can be met, thereby drastically reducing power supply costs.

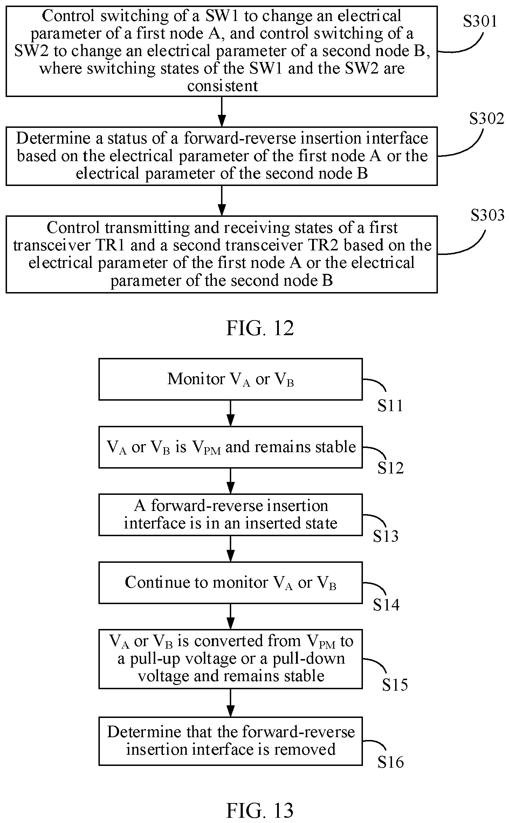

FIG. 12 is a schematic flowchart of a forward-reverse insertion interface detection method according to an embodiment of this application. The method may be applied to the apparatus with a forward-reverse insertion interface provided above. The apparatus may be an electronic device, the chip used in the electronic device, or the like. The method includes the following steps.

S301: A control circuit CTRL controls switching of a first switch selection circuit SW1 to change an electrical parameter of a first node A, and controls switching of a second switch selection circuit SW2 to change an electrical parameter of a second node B. Switching states of the first switch selection circuit SW1 and the second switch selection circuit SW2 are consistent.

Specifically, the control circuit CTRL may control a first end 1 of the first switch selection circuit SW1 to be connected to a second end 2 of the first switch selection circuit SW1, and control a first end 1 of the second switch selection circuit SW2 to be connected to a second end 2 of the second switch selection circuit SW2; and/or the control circuit CTRL may control the first end 1 of the first switch selection circuit SW1 to be connected to a third end 3 of the first switch selection circuit SW1, and control the first end 1 of the second switch selection circuit SW2 to be connected to a third end 3 of the second switch selection circuit SW2.

For example, when the apparatus is power sourcing equipment that is not a power adapter, the control circuit CTRL may control, based on a specific time sequence, the first end 1 of the first switch selection circuit SW1 and the first end 1 of the second switch selection circuit SW2 to be respectively connected to the respective second ends 2 and the respective third ends 3. When the apparatus is the power adapter, the control circuit CTRL may control the first end 1 of the first switch selection circuit SW1 and the first end 1 of the second switch selection circuit SW2 to be respectively connected to the respective second ends 2. When the apparatus is a powered device, the first end 1 of the first switch selection circuit SW1 and the first end 1 of the second switch selection circuit SW2 in the apparatus are respectively connected to respective fourth ends 4 by default.

S302: The control circuit CTRL determines a status of the forward-reverse insertion interface based on the electrical parameter of the first node A or the electrical parameter of the second node B. The electrical parameter may include a voltage or a current.

Specifically, when the apparatus is the power sourcing equipment, the control circuit CTRL may obtain the electrical parameter of the first node A and the electrical parameter of the second node B in real time; and determine the status of the forward-reverse insertion interface based on the electrical parameter of the first node A or the electrical parameter of the second node B. The status of the forward-reverse insertion interface may include an inserted state or an unattached state, a forward insertion state or a reverse insertion state when the forward-reverse insertion interface is in an inserted state, or the like. When the apparatus is the powered device, the apparatus does not need to detect the status of the forward-reverse insertion interface.

In a possible embodiment, when the electrical parameter is the voltage, that the control circuit CTRL determines a status of the forward-reverse insertion interface based on the electrical parameter of the first node A or the electrical parameter of the second node B includes: if a voltage of the first node A or a voltage of the second node B is within a preset voltage range and duration of being within the preset voltage range is greater than first preset time, determining that the forward-reverse insertion interface is in the inserted state; if the voltage of the first node or the voltage of the second node is converted from the preset voltage range to a pull-up voltage or a pull-down voltage, and duration of being converted to the pull-up voltage or the pull-down voltage is greater than second preset time, determining that the forward-reverse insertion interface is removed; and if the voltage of the first node A or the voltage of the second node B is switched between the pull-up voltage and the pull-down voltage, determining that the forward-reverse insertion interface is in the unattached state.

For example, as shown in FIG. 13, the control circuit CTRL may detect the inserted state and the removed state of the forward-reverse insertion interface through the following steps. Specific steps include: S11: Monitor the voltage V_{A} of the first node A or the voltage V_{B} of the second node B. S12: Determine that the voltage V_{A} of the first node A or the voltage V_{B} of the second node B is V_{PM} and remains stable, where V_{PM} is within the preset voltage range. S13: Determine that the forward-reverse insertion interface is in the inserted state. S14: Continue to monitor the voltage V_{A} of the first node A or the voltage V_{B} of the second node B. S15: Determine that the voltage V_{A} of the first node A or the voltage V_{B} of the second node B is converted from V_{PM} to the pull-up voltage or the pull-down voltage and remains stable. S16: Determine that the forward-reverse insertion interface is removed.

In another possible embodiment, when the forward-reverse insertion interface is in the inserted state, the control circuit CTRL may further determine the forward insertion state or the reverse insertion state of the forward-reverse insertion interface based on the electrical parameter of the first node A or the electrical parameter of the second node B. Specifically, when the electrical parameter is the voltage, if the voltage V_{A} of the first node A is within the preset voltage range and the duration of being within the preset voltage range is greater than the first preset time, it is determined that the forward-reverse insertion interface is in the forward insertion state. If the voltage V_{B} of the second node B is within the preset voltage range and the duration of being within the preset voltage range is greater than the first preset time, it is determined that the forward-reverse insertion interface is in the reverse insertion state.

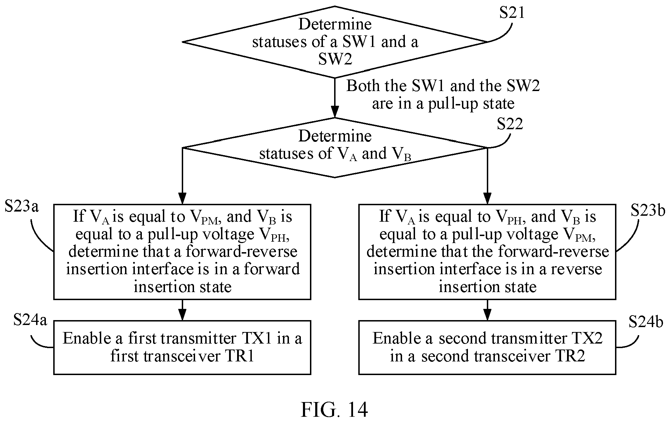

For example, when the forward-reverse insertion interface is in the inserted state, as shown in FIG. 14, the control circuit CTRL may detect the forward insertion state and the reverse insertion state of the forward-reverse insertion interface through the following steps. Specific steps include: S21: Determine statuses of the first switch selection circuit SW1 and the second switch selection circuit SW2, and if the first switch selection circuit SW1 is in the pull-down state and the second switch selection circuit SW2 is in a suspended state, this step is ended (in other words, forward insertion or reverse insertion cannot be detected), and if the first switch selection circuit SW1 and the second switch selection circuit SW2 are both in the pull-up state, perform S22. S22: Determine statuses of the voltage V_{A} of the first node A and the voltage V_{B} of the second node B. S23a: If the voltage V_{A} of the first node A is equal to V_{PM}, and the voltage V_{B} of the second node B is equal to a pull-up voltage V_{PH}, determine that the forward-reverse insertion interface is in the forward insertion state. S23b: If the voltage V_{A} of the first node A is equal to the V_{PH}, and the voltage V_{B} of the second node B is equal to the pull-up voltage V_{PM}, determine that the forward-reverse insertion interface is in the reverse insertion state. V_{PM} is within the preset voltage range.

Optionally, the method further includes S303: The control circuit CTRL controls, transmitting and receiving statuses of a first transceiver TR1 and a second transceiver TR2 based on the electrical parameter of the first node A or the electrical parameter of the second node B.

In a possible embodiment, when the apparatus is the power sourcing equipment, and the first end 1 of the first switch selection circuit SW1 is connected to the second end 2 of the first switch selection circuit SW1, and the first end 1 of the second switch selection circuit SW2 is connected to the second end 2 of the second switch selection circuit SW2, if the forward-reverse insertion interface is in the forward insertion state, the control circuit CTRL may control the first transceiver TR1 to be in a transmitting state, and the second transceiver TR2 may be in a receiving state by default. If the forward-reverse insertion interface is in the reverse insertion state, the control circuit CTRL may control the second transceiver TR2 to be in the transmitting state, and the first transceiver TR1 may be in the receiving state by default. For example, as shown in FIG. 14, when the control circuit CTRL determines the forward insertion state or the reverse insertion state of the forward-reverse insertion interface, steps in which the control circuit CTRL controls the transmitting and receiving statuses of the first transceiver TR1 and the second transceiver TR2 may include: S24a: When the forward-reverse insertion interface is in the forward insertion state, the control circuit CTRL enables a first transmitter TX1 in the first transceiver TR1, to set the first transceiver TR1 to the transmitting state. S24b: When the forward-reverse insertion interface is in the reverse insertion state, the control circuit CTRL enables a second transmitter TX2 in the second transceiver TR2, to set the second transceiver TR2 to the transmitting state.

In another possible embodiment, when the apparatus is the power sourcing equipment, and the first end 1 of the first switch selection circuit SW1 is connected to the third end 3 of the first switch selection circuit SW1, and the first end 1 of the second switch selection circuit SW2 is connected to the third end 3 of the second switch selection circuit SW2, the control circuit CTRL may control the second transceiver TR2 to be in the transmitting state, and the first transceiver TR1 may be in the receiving state by default. In addition, when the apparatus is the powered device, the control circuit CTRL may control the second transceiver TR2 to be in the transmitting state, and the first transceiver TR1 may be in the receiving state by default.

It should be noted that for detailed descriptions of each detail involved in the foregoing method embodiments, refer to the description in the apparatus embodiments provided above. In other words, content in the foregoing apparatus embodiments may be referenced to the method embodiments. Details are not described herein again in this embodiment of this application.

In embodiments of this application, the forward-reverse insertion interface has two independent auxiliary channels. The first switch selection circuit SW1 and the second switch selection circuit SW2 in the two auxiliary channels are structurally asymmetric, in other words, the two auxiliary channels are asymmetrically set. In this way, in the inserted state of the forward-reverse insertion interface, the electrical parameter (for example, the voltage or the current) of the first node A is different from the electrical parameter of the second node B, so that forward insertion and reverse insertion of the forward-reverse insertion interface can be effectively distinguished. In addition, the asymmetrical setting may enable the two auxiliary channels in the forward-reverse insertion interface to be respectively connected to two auxiliary channels in an interface of a peer device through two conducting wires in a cable. In this way, both the two auxiliary channels are in a connected state when the forward-reverse insertion interface is in the inserted state. In other words, both the two auxiliary channels may be used to transmit information simultaneously. Therefore, in the inserted state, a full-duplex transmission path may be established based on the two auxiliary channels, to improve transmission efficiency of the auxiliary channels.

In another embodiment of this application, a power supply system is further provided. The power supply system may be any apparatus with the forward-reverse insertion interface provided above. The apparatus may be specifically the power sourcing equipment or the power adapter described above. For a specific description of the apparatus, refer to the descriptions in the apparatus embodiments provided above.

In another embodiment of this application, a communication system is further provided. The communication system may include a first device and a second device. At least one of the first device and the second device includes any apparatus with the forward-reverse insertion interface provided above. For a specific description of the apparatus, refer to the descriptions in the apparatus embodiments provided above.

In another embodiment of this application, a computer-readable storage medium is further provided. The computer-readable storage medium stores instructions. When at least one processor of a device executes the instructions, the device is enabled to perform one or more steps in the forward-reverse insertion interface detection method provided in this specification.

In another embodiment of this application, a computer program product is further provided. The computer program product includes computer-executable instructions that are stored in a computer-readable storage medium. At least one processor of a device may read the computer-executable instructions from a computer-readable storage medium. The at least one processor executes the computer-executable instructions, so that the device performs one or more steps in the forward-reverse insertion interface detection method provided in this specification.

It should be finally noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An apparatus with a forward-reverse insertion interface, wherein the forward-reverse insertion interface comprises a first auxiliary channel, a second auxiliary channel, and a control circuit;
the first auxiliary channel comprises a first switch selection circuit, wherein the first switch selection circuit is coupled to a first node;
the second auxiliary channel comprises a second switch selection circuit, wherein the second switch selection circuit is coupled to a second node, and the second switch selection circuit and the first switch selection circuit are structurally asymmetrical; and
the control circuit is configured to control switching of the first switch selection circuit to change an electrical parameter of the first node, and control switching of the second switch selection circuit to change an electrical parameter of the second node, wherein switching states of the first switch selection circuit and the second switch selection circuit are consistent.

2. The apparatus according to claim 1, wherein the first auxiliary channel further comprises a first transceiver coupled to the first node, the second auxiliary channel further comprises a second transceiver coupled to the second node, and the control circuit is further configured to:
control transmitting and receiving statuses of the first transceiver and the second transceiver based on the electrical parameter of the first node or the electrical parameter of the second node, wherein the electrical parameter comprises a voltage or a current.

3. The apparatus according to claim 1 or 2, wherein the control circuit is further configured to:
determine a status of the forward-reverse insertion interface based on the electrical parameter of the first node or the electrical parameter of the second node, wherein the electrical parameter comprises the voltage or the current.

4. The apparatus according to any one of claims 1 to 3, wherein the second switch selection circuit and the first switch selection circuit being structurally asymmetrical comprises:
a first end of the first switch selection circuit is coupled to the first node, a second end of the first switch selection circuit is coupled to a first voltage end by using a first pull-up resistor, and a third end of the first switch selection circuit is coupled to a grounding end by using a first pull-down resistor; and
a first end of the second switch selection circuit is coupled to the second node, a second end of the second switch selection circuit is coupled to the first voltage end by using a second pull-up resistor, and a third end of the second switch selection circuit is suspended.

5. The apparatus according to any one of claims 1 to 4, wherein the apparatus further comprises:
a detection circuit, configured to detect the electrical parameter of the first node and the electrical parameter of the second node, and send the electrical parameters to the control circuit.

6. The apparatus according to any one of claims 1 to 5, wherein the apparatus further comprises a direct current/direct current voltage converter, and a marker resistor coupled between the first node and the grounding end; and
an input end of the direct current/direct current voltage converter is configured to receive an input direct current voltage, a voltage value of the direct current voltage is related to a resistance value of the marker resistor, and an output end of the direct current/direct current voltage converter is configured to supply power to the apparatus.

7. The apparatus according to claim 6, wherein the first end of the first switch selection circuit is connected to a fourth end of the first switch selection circuit by default, and the first end of the second switch selection circuit is connected to a fourth end of the second switch selection circuit by default, wherein both the fourth end of the first switch selection circuit and the fourth end of the second switch selection circuit are in a floating state, and the control circuit is further configured to:
control the second transceiver in the second auxiliary channel to be in a transmitting state.

8. The apparatus according to any one of claims 1 to 5, wherein the apparatus further comprises a direct current/direct current voltage converter and a switch, wherein an input end of the direct current/direct current voltage converter is configured to receive a first direct current voltage, an output end of the direct current/direct current voltage converter is coupled to a first end of the switch, and a second end of the switch is configured to output a second direct current voltage.

9. The apparatus according to any one of claims 1 to 5 or 8, wherein the apparatus further comprises an alternating current/direct current voltage converter, wherein an input end of the alternating current/direct current voltage converter is configured to receive an alternating current voltage, and an output end of the alternating current/direct current voltage converter is configured to output the first direct current voltage.

10. The apparatus according to claim 8 or 9, wherein the control circuit is further configured to:
if a voltage of the first node or a voltage of the second node is within a preset voltage range and duration of being within the preset voltage range is greater than first preset time, determine that the forward-reverse insertion interface is in an inserted state;
if the voltage of the first node or the voltage of the second node is switched from the preset voltage range to a pull-up voltage or a pull-down voltage, determine that the forward-reverse insertion interface is removed; and
if the voltage of the first node or the voltage of the second node is switched between the pull-up voltage and the pull-down voltage, determine that the forward-reverse insertion interface is in an unattached state.

11. The apparatus according to any one of claims 8 to 10, wherein the first end of the first switch selection circuit is connected to the second end of the first switch selection circuit, the first end of the second switch selection circuit is connected to the second end of the second switch selection circuit, and the control circuit is further configured to:
if the voltage of the first node is within the preset voltage range and the duration of being within the preset voltage range is greater than the first preset time, determine that the forward-reverse insertion interface is in a forward insertion state; and
if the voltage of the second node is within the preset voltage range and the duration of being within the preset voltage range is greater than the first preset time, determine that the forward-reverse insertion interface is in a reverse insertion state.

12. The apparatus according to claim 11, wherein the control circuit is further configured to:
when the forward-reverse insertion interface is in the forward insertion state, control the first transceiver in the first auxiliary channel to be in a transmitting state; and
when the forward-reverse insertion interface is in the reverse insertion state, control the second transceiver in the second auxiliary channel to be in the transmitting state.

13. The apparatus according to any one of claims 8 to 12, wherein the control circuit is further configured to:
when the forward-reverse insertion interface is in the forward insertion state, adjust an output voltage of the direct current/direct current voltage converter based on the voltage of the first node; and
when the forward-reverse insertion interface is in the reverse insertion state, adjust the output voltage of the direct current/direct current voltage converter based on the voltage of the second node.

14. The apparatus according to claim 13, wherein the control circuit is further configured to:
obtain, from a preset voltage relationship, a first output voltage corresponding to a first marker voltage, wherein the first marker voltage is the voltage of the first node or the voltage of the second node, and the preset voltage relationship indicates a correspondence between a plurality of marker voltages and a plurality of output voltages; and
adjust the output voltage of the direct current/direct current voltage converter to be equal to the first output voltage.

15. The apparatus according to any one of claims 8 to 14, wherein the control circuit is further configured to:
determine, based on the voltage of the first node or the voltage of the second node, a type of a device connected to the forward-reverse insertion interface, wherein the type is a powered device or power sourcing equipment.

16. The apparatus according to any one of claims 8 to 10, wherein the first end of the first switch selection circuit is connected to the third end of the first switch selection circuit, the first end of the second switch selection circuit is connected to the third end of the second switch selection circuit, and the control circuit is further configured to:
control the second transceiver to be in a transmitting state.

17. A forward-reverse insertion interface detection method, wherein a forward-reverse insertion interface comprises a first auxiliary channel, a second auxiliary channel, and a control circuit, the first auxiliary channel comprises a first switch selection circuit, the second auxiliary channel comprises a second switch selection circuit, the first switch selection circuit and the second switch selection circuit are structurally asymmetrical, the first switch selection circuit is coupled to a first node, the second switch selection circuit is coupled to a second node, and the method comprises:
controlling, by the control circuit, switching of the first switch selection circuit to change an electrical parameter of the first node, and controlling switching of the second switch selection circuit to change an electrical parameter of the second node, wherein switching states of the first switch selection circuit and the second switch selection circuit are consistent; and
determining a status of the forward-reverse insertion interface based on the electrical parameter of the first node or the electrical parameter of the second node.

18. The method according to claim 17, wherein the first auxiliary channel further comprises a first transceiver coupled to the first node, the second auxiliary channel further comprises a second transceiver coupled to the second node, and the method further comprises:
controlling transmitting and receiving statuses of the first transceiver and the second transceiver based on the electrical parameter of the first node or the electrical parameter of the second node, wherein the electrical parameter comprises a voltage or a current.

19. The method according to claim 17 or 18, wherein when the electrical parameter comprises the voltage, the determining a status of the forward-reverse insertion interface based on the electrical parameter of the first node or the electrical parameter of the second node comprises:
if a voltage of the first node or a voltage of the second node is within a preset voltage range and duration of being within the preset voltage range is greater than first preset time, determining that the forward-reverse insertion interface is in an inserted state;
if the voltage of the first node or the voltage of the second node is switched from the preset voltage range to a pull-up voltage or a pull-down voltage, determining that the forward-reverse insertion interface is in a removed state; and
if the voltage of the first node or the voltage of the second node is switched between the pull-up voltage and the pull-down voltage, determining that the forward-reverse insertion interface is in an unattached state.

20. The method according to any one of claims 17 to 19, wherein the second switch selection circuit and the first switch selection circuit being structurally asymmetrical comprises:
a first end of the first switch selection circuit is coupled to the first node, a second end of the first switch selection circuit is coupled to a first voltage end by using a first pull-up resistor, and a third end of the first switch selection circuit is coupled to a grounding end by using a first pull-down resistor; and
a first end of the second switch selection circuit is coupled to the second node, a second end of the second switch selection circuit is coupled to the first voltage end by using a second pull-up resistor, and a third end of the second switch selection circuit is suspended.

21. The method according to claim 20, wherein the first end of the first switch selection circuit is connected to the third end of the first switch selection circuit, and the first end of the second switch selection circuit is connected to the third end of the second switch selection circuit, the second auxiliary channel further comprises the second transceiver coupled to the second node, and the method further comprises:
controlling the second transceiver to be in a transmitting state.

22. The method according to claim 20, wherein the first end of the first switch selection circuit is connected to the second end of the first switch selection circuit, and the first end of the second switch selection circuit is connected to the second end of the second switch selection circuit, and the determining a status of the forward-reverse insertion interface based on the electrical parameter of the first node or the electrical parameter of the second node further comprises:
if the voltage of the first node is within the preset voltage range and the duration of being within the preset voltage range is greater than the first preset time, determining that the forward-reverse insertion interface is in a forward insertion state; and
if the voltage of the second node is within the preset voltage range and the duration of being within the preset voltage range is greater than the first preset time, determining that the forward-reverse insertion interface is in a reverse insertion state.

23. The method according to claim 22, wherein the first auxiliary channel further comprises the first transceiver coupled to the first node, the second auxiliary channel further comprises the second transceiver coupled to the second node, and the method further comprises:
when the forward-reverse insertion interface is in the forward insertion state, controlling the first transceiver to be in a transmitting state; and
when the forward-reverse insertion interface is in the reverse insertion state, controlling the second transceiver to be in the transmitting state.

24. The method according to any one of claims 17 to 23, wherein an apparatus further comprises a direct current/direct current voltage converter, the direct current/direct current voltage converter is configured to convert a received direct current voltage into an output voltage, and the method further comprises:
when the forward-reverse insertion interface is in the forward insertion state, adjusting the output voltage of the direct current/direct current voltage converter based on the voltage of the first node; and/or
when the forward-reverse insertion interface is in the reverse insertion state, adjusting the output voltage of the direct current/direct current voltage converter based on the voltage of the second node.

25. The method according to claim 24, wherein the adjusting the output voltage of the direct current/direct current voltage converter comprises:
obtaining, from a preset voltage relationship, a first output voltage corresponding to a first marker voltage, wherein the first marker voltage is the voltage of the first node or the voltage of the second node, and the preset voltage relationship indicates a correspondence between a plurality of marker voltages and a plurality of output voltages; and
adjusting the output voltage of the direct current/direct current voltage converter to be equal to the first output voltage.

26. The method according to any one of claims 17 to 25, wherein the method further comprises:
determining, based on the voltage of the first node or the voltage of the second node, a type of a device connected to the forward-reverse insertion interface, wherein the type of the device is a powered device or power sourcing equipment.

27. A communication system, wherein the communication system comprises a first device and a second device, and at least one of the first device and the second device comprises the apparatus with the forward-reverse insertion interface according to any one of claims 1 to 16.
